(19) Europäisches Patentamt
European Patent Office
Office européen des brevets

(11) EP 1 785 753 A1

(12) EUROPEAN PATENT APPLICATION
published in accordance with Art. 158(3) EPC

(43) Date of publication:
16.05.2007 Bulletin 2007/20

(21) Application number: 05774708.1

(22) Date of filing: 25.08.2005

(51) Int Cl.:
G02B 5/30 (2006.01) G02F 1/13363 (2006.01)
B32B 27/20 (2006.01) B32B 27/34 (2006.01)

(86) International application number:
PCT/JP2005/015484

(87) International publication number:
WO 2006/025263 (09.03.2006 Gazette 2006/10)

(84) Designated Contracting States:
AT BE BG CH CY CZ DE DK EE ES FI FR GB GR HU IE IS IT LI LT LU LV MC NL PL PT RO SE SI SK TR

(30) Priority: 30.08.2004 JP 2004250561
22.09.2004 JP 2004275426

(71) Applicant: JSR Corporation
Tokyo 104-0045 (JP)

(72) Inventors:
- SEKIGUCHI, Masayuki
u, Tokyo 1040045; (JP)
- USHINO, Takuhiro
u, Tokyo 1040045; (JP)
- SUGIYAMA, Naoki
u, Tokyo 1040045; (JP)
- HIRONO, Tatsuya
u, Tokyo 1040045; (JP)
- KAWASHIMA, Naoyuki
u, Tokyo 1040045; (JP)

(74) Representative: Leson, Thomas Johannes Alois
Patentanwälte
Tiedtke-Bühling-Kinne & Partner,
Bavariaring 4
80336 München (DE)

# (54) OPTICAL FILM, POLARIZATION PLATE AND LIQUID CRYSTAL DISPLAY

(57) [Problems]

To provide an optical film for a liquid crystal display, in which a wide range of a retardation of transmitted light can be controlled in manufacturing and good viewing angle compensation effects on such as preventing light leakage or color dropout (coloring) in true black display and achieving a high contrast in all directions can be obtained when used in liquid crystal display.

[Means for solving problems]

The optical film of the invention includes a film (a) layer made of a cyclic olefin resin and a film (b) layer made of a polyimide resin or a polyetherimide resin, wherein following formulae (1) and (2) are preferably satisfied: (1) 200 nm ≦ Rth ≦ 1,000 nm and (2) 0 ≦ R550 ≦ 200 nm, wherein Rth and R550 represent the retardation in the direction of film thickness and the in-plane retardation of the film, respectively, at wavelength of 550 nm.

EP 1 785 753 A1

## Description

### Technical Field

The present invention relates to an optical film, a polarizer and a liquid crystal display. More specifically, it relates to an optical film for liquid crystal displays comprising a cyclic olefin resin film and a polyimide or polyetherimide resin film, a polarizer comprising said optical film, and a liquid crystal display comprising said optical film or said polarizer.

### Background Art

A liquid crystal display has advantages such as very thin and compact features and low power consumption, and hence it is widely used in various products such as cellular phones, notebook personal computers, car navigation systems, and liquid crystal television sets (TV). Among them, a liquid crystal TV with a transmissive liquid crystal display (particularly, vertically aligned (VA) mode) is anticipated to have larger demand in future, and along with enlargement of display size, there is a demand more than ever for high display performances, such as a wide viewing angle and high brightness, and cost reduction.

In the case of a transmissive liquid crystal display in which a pair of polarizers are used in the cross-Nicol state (state where the transmission axes of polarizers are perpendicular to each other), when a viewing position at the display is shifted from the front of the display to a position in an oblique direction, the angle between the transmission axes of two polarizers apparently deviates from 90 degrees, causing problems such as light leakage at black display and color dropout (coloration). In order to solve these problems, various retardation films are placed between a liquid crystal cell and each polarizer to compensate the viewing angle dependence of the polarizer.

As such retardation films, for example, optical films containing thermoplastic norbornene resins are known (See, for example, Patent Documents 1 to 3). Such optical films composed of norbornene resins have excellent optical properties such as high transparency, small retardation of transmitted light, and ability of providing a uniform and stable retardation to transmitted light.

In liquid crystal TV and others, a retardation film with a high retardation value in thickness direction is required in order to prevent light leakage and to obtain a high contrast ratio. With the conventional retardation films described above, however, such requirements were difficult to be satisfied well.

It has been also asked to develop a constitution and a processing method allowing control of a wide range of optical properties in order to obtain a retardation film with optical properties according to properties of the liquid crystal cell.

Furthermore, in a conventional liquid display, at least two retardation films are used, because the viewing angle compensation is made by providing a retardation film between the liquid crystal cell and each of the two polarizers. It has been asked, however, to develop a retardation film enabling the viewing angle compensation with a single sheet of retardation film in order to further reduce thickness and production cost of the liquid crystal display.

A conventional polarizer uses an ultraviolet absorber (UVA), which is added to the protective film (for example, film made of triacetyl cellulose (TAC)) portion of the polarizer, in order to prevent liquid crystal in the liquid crystal cell portion from being deteriorated by ultraviolet light from a light source or ambient exposure in use. However, such a method imposed cost increase due to addition of an ultraviolet absorber, and particularly in using a protective film that also has a function of making retardation, there has been a problem that the stability of retardation is not sufficiently durable.

Patent Document 1: Japanese Patent Laid-open Publication No. H5-2108

Patent Document 2: Japanese Patent Laid-open Publication No. H7-287122

Patent Document 3: Japanese Patent Laid-open Publication No. H7-287123

### Disclosure of the Invention

<Problems to be Solved by the Invention>

An object of the present invention is to provide an optical film that can be manufactured in such a manner that the retardation of transmitted light can be controlled in a wide range, the optical film having good viewing angle compensation effects such as prevention of light leakage at black display and color dropout (coloring) with long term stability and achievement of high contrast ratios in all directions when used in a liquid crystal display; a polarizer comprising said optical film; and a liquid crystal display comprising said optical film or said polarizer.

<Means for Solving the Problems>

The present inventors have earnestly studied to solve the above problems. Thereby, they have discovered that the above problems can be solved with an optical film wherein a film layer made of a polyimide resin or a polyetherimide resin is provided on a particular cyclic olefin resin film, and they have completed the present invention.

That is, the optical film of the present invention comprises a film (a) layer made of a cyclic olefin resin and a film (b) layer made of a polyimide resin or a polyetherimide resin, and preferably it satisfies formulae (1) and (2) below:

$$(1)\ 200\ \text{nm} \leq Rth \leq 1{,}000\ \text{nm}$$

$$(2)\ 0 \leq R550 \leq 200\ \text{nm}.$$

(In the above formulae, Rth represents the retardation in the direction of film thickness at wavelength of 550 nm and is given by Rth = [(nx + ny)/2-nz] x d; R550 represents the in-plane retardation of the film at wavelength of 550 nm and is given by R550 = (nx - ny) x d; nx represents the maximum value of refractive index in directions on the film plane; ny represents the refractive index in the direction perpendicular to the axis for nx in the film plane; nz represents the refractive index in the direction of film thickness perpendicular to the axes for nx and ny; and d represents the film thickness in nm.)

Preferably, the film (a) layer is made of a cyclic olefin resin composed of 30 to 100mol% of a constitutional unit represented by general formula (I) below and optionally 70 to 0mol% of a constitutional unit represented by general formula (II) below. Preferably, the film (a) layer is 10,000 nm to 200,000 nm thick, and it is a film layer obtained by uniaxial or biaxial stretching so as to satisfy formulae (3) to (6) below.

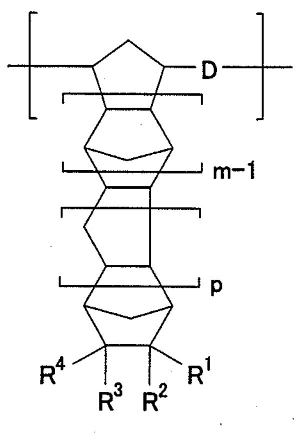

...(I)

[In formula (I), m is an integer of 1 or more, p is 0 or an integer of 1 or more, and D is independently a group represented by -CH=CH- or $-CH_2-CH_2-$. Each of $R^1$ to $R^4$ independently represents a hydrogen atom; a halogen atom; a substituted or unsubstituted hydrocarbon group having 1 to 30 carbon atoms that may have a linkage containing an oxygen atom, a sulfur atom, a nitrogen atom or a silicon atom; or a polar group. $R^1$ and $R^2$ and/or $R^3$ and $R^4$ may be unified into a divalent hydrocarbon group. Either $R^1$ or $R^2$ and either $R^3$ or $R^4$ may bond to each other to form a carbocyclic or heterocyclic ring, and said carbocyclic or heterocyclic ring may be monocyclic or polycyclic.]

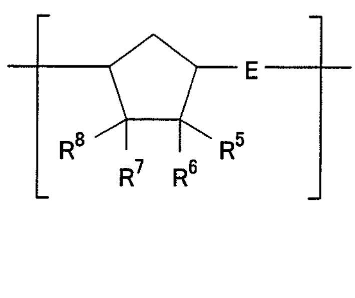

...(II)

[In formula (II), E is independently a group represented by $-CH=CH-$ or $-CH_2-CH_2-$. Each of $R^5$ to $R^8$ independently represents a hydrogen atom; a halogen atom; a substituted or unsubstituted hydrocarbon group having 1 to 30 carbon atoms that may have a linkage containing an oxygen atom, a sulfur atom, a nitrogen atom or a silicon atom; or a polar group. $R^5$ and $R^6$ and/or $R^7$ and $R^8$ may be unified into a divalent hydrocarbon group. Either $R^5$ or $R^6$ and either $R^7$ or $R^8$ may bond to each other to form a carbocyclic or heterocyclic ring, and said carbocyclic or heterocyclic ring may be monocyclic or polycyclic.]

$$(3)\ 20\ \text{nm} \leq R_a th \leq 500\ \text{nm}$$

$$(4)\ 0 \leq R_a 550 \leq 200\ \text{nm}$$

$$(5)\ 1.00 \leq R_a 450/R_a 550 \leq 1.30$$

$$(6)\ 0.70 \leq R_a 650/R_a 550 \leq 1.00$$

In formulae (3) to (6), $R_a th$ represents the retardation in the direction of thickness of film (a) at wavelength of 550 nm and is given by $R_a th = [(nx_a + ny_a)/2 - nz_a] \times d_a$; and $R_a 450$, $R_a 550$ and $R_a 650$ represent the in-plane retardation of the film (a), $R_a$, at wavelengths of 450 nm, 550 nm and 650 nm, respectively, $R_a$ being given by $R_a = (nx_a - ny_a) \times d_a$. Here, $nx_a$ represents the maximum value of refractive index in directions on the film (a) plane, $ny_a$ represents the refractive index in the direction perpendicular to the axis for $nx_a$ in the film (a) plane, $nz_a$ is the refractive index in the direction of thickness of film (a) perpendicular to the axes for $nx_a$ and $ny_a$, and $d_a$ represents the thickness of film (a) in nm.

The polyimide resin constituting the film (b) layer includes, preferably, polyimide resins having an alicyclic structure, and more preferably, polyimide resins having a constitutional unit represented by formula (III) below.

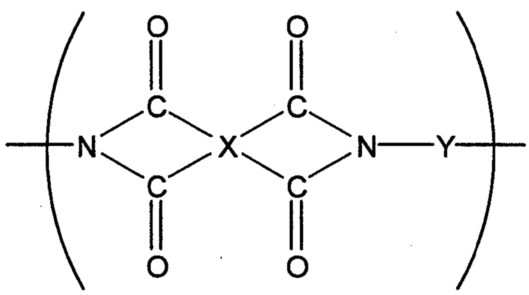

...(III)

[In formula (III), X is a tetravalent organic group having an alicyclic structure and Y is a divalent organic group.]

The polyetherimide resin constituting the film (b) layer includes polyetherimide resins having a constitutional unit represented by general formula (IV) below.

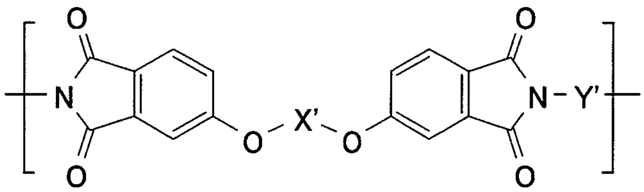

...(IV)

[In formula (IV), X' and Y' may be identical to or different from each other, and each represents a saturated or unsaturated

hydrocarbon group.]

The film (b) layer preferably satisfies formulae (7) to (10) below.

$$(7)\quad 100\ nm \leq R_bth \leq 1{,}000\ nm$$

$$(8)\quad 0 \leq R_b550 \leq 200\ nm$$

$$(9)\quad 1.00 \leq R_b450/R_b550 \leq 1.30$$

$$(10)\quad 0.7 \leq R_b650/R_b550 \leq 1.00$$

In formulae (7) to (10), $R_bth$ represents the retardation in the direction of thickness of film (b) at wavelength of 550 nm and is given by $R_bth = [(nx_b + ny_b)/2-nz_b] \times d_b$; and $R_b450$, $R_b550$ and $R_b650$ represent the in-plane retardation of the film (b) , $R_b$, at wavelengths of 450 nm, 550 nm and 650 nm, respectively, $R_b$ being given by $R_b = (nx_b - ny_b) \times d_b$. Provided, however, that the sum of $R_ath$ above and $R_bth$ is 1,000 nm or less, and that the sum of $R_a550$ above and $R_b550$ is 200 nm or less. Here, $nx_b$ represents the maximum value of refractive index in directions on the film (b) plane, $ny_b$ represents the refractive index in the direction perpendicular to the axes for $nx_b$ in the film (b) plane, $nz_b$ is the refractive index in the direction of thickness to film (b) perpendicular to the axes for $nx_b$ and $ny_b$, and $d_b$ represents the thickness of film (b) in nm.

The optical film of the present invention may have an acrylic and/or urethane primer (c) layer between the film (a) layer and the film (b) layer. An optical film with such an acrylic and/or urethane primer (c) layer can be obtained by a method in which the primer (c) layer is formed, by coating, on the film (a) obtained by uniaxial or biaxial stretching, and the film (b) layer is formed on said primer (c) layer by coating. Alternatively, the above optical film can be also obtained by a method in which the primer (c) layer is formed, by coating, on an unstretched film made of a cyclic olefin resin, the film (b) layer is formed by coating on said primer (c) layer, and the resultant laminate is uniaxially or biaxially stretched.

The polarizer of the present invention comprises such optical film of the present invention.

The liquid crystal display of the present invention comprises the optical film of the present invention or such polarizer of the present invention.

<Effects of the Invention>

The optical film of the present invention retains optical properties such as high transparency, low retardation, and uniformity and stability in retardation after stretching and orientation, which are characteristics of conventional cyclic olefin resin films, and further exhibits good heat resistance, good adhesion or bondability to other materials, and small distortion due to water absorption. In manufacturing this optical film, one can control the retardation provided to transmitted light by said optical film. Furthermore, owing to easy generation and control of the retardation, good viewing angle compensation effects are stably attained when the optical film is used in a liquid crystal display.

When the optical film (retardation film) of the present invention is used, viewing angle compensation effects can be sufficiently achieved with one optical film without use of two optical films (retardation films) as before. Furthermore, the properties of the optical film can be stably exerted for a long period irrespective of environmental changes in use.

## Best Mode for Carrying out the Invention

The optical film, polarizer and liquid crystal display of the present invention are described in detail below.

[Optical film]

<Constitution and optical properties>

The optical film of the present invention is a film comprising a film (a) layer made of a cyclic olefin resin and a film (b) layer made of a polyimide resin or a polyetherimide resin, and preferably it satisfies formulae (1) and (2) below.

$$(1)\ 200\ \text{nm} \leq Rth \leq 1{,}000\ \text{nm}$$

$$(2)\ 0 \leq R550 \leq 200\ \text{nm}.$$

In formulae (1) and (2), Rth represents the retardation in the direction of film thickness at wavelength of 550 nm and is given by Rth = [(nx + ny)/2-nz] x d, whereas R550 represents the in-plane retardation of the film at wavelength of 550 nm and is given by R550 = (nx - ny) x d. Here, nx represents the maximum value of refractive index in the directions on the film plane, ny represents the refractive index in the direction perpendicular to the axis for nx in the film plane, nz represents the refractive index in the direction of film thickness perpendicular to the axes for nx and ny, and d represents the film thickness in nm.

As shown in formula (1), Rth of the optical film of the present invention is in a range of 200 to 1,000 nm, preferably 200 to 400 nm, and more preferably 250 to 300 nm. As shown in formula (2), R550 of the optical film of the present invention is in a range of 0 to 200 nm, preferably 10 to 150 nm, more preferably 30 to 100 nm. By using the optical film with such properties, light leakage of the liquid crystal display viewed from oblique direction is particularly prevented, resulting in a high contrast ratio.

<Film (a)>

The film (a) layer constituting the optical film of the present invention is made of a cyclic olefin resin and preferably satisfies formulae (3) to (6) below.

$$(3)\ 20\ \text{nm} \leq R_a th \leq 500\ \text{nm}$$

$$(4)\ 0 \leq R_a 550 \leq 200\ \text{nm}$$

$$(5)\ 1.00 \leq R_a 450/R_a 550 \leq 1.30$$

$$(6)\ 0.70 \leq R_a 650/R_a 550 \leq 1.00$$

In formulae (3) to (6), $R_a th$ represents the retardation in the direction of thickness of film (a) at wavelength of 550 nm and is given by $R_a th = [(nx_a + ny_a)/2 - nz_a] \times d_a$; and $R_a 450$, $R_a 550$ and $R_a 650$ represent the in-plane retardation of the film (a), $R_a$, at wavelengths of 450 nm, 550 nm and 650 nm, respectively, $R_a$ being given by $R_a = (nx_a - ny_a) \times d_a$. Here, $nx_a$ represents the maximum value of refractive index in directions on the film (a) plane, $ny_a$ represents the refractive index in the direction perpendicular to the axis for $nx_a$ in the film (a) plane, $nz_a$ is the refractive index in the direction of thickness of film (a) perpendicular to the axes for $nx_a$ and $ny_a$, and $d_a$ represents the thickness of film (a) in nm.

As shown in formula (3), $R_a th$ of the layer of film (a) is 20 to 500 nm, preferably 20 to 200 nm, and more preferably 50 to 150 nm.

As shown in formula (4), $R_a 550$ of the layer of film (a) is 0 to 200 nm, preferably 5 to 100 nm, and more preferably 20 to 70 nm.

In the layer of film (a), as shown in above formula (5), the value of $R_a450/R_a550$ is in a range of 1.00 to 1.30, preferably 1.00 to 1.20, and more preferably 1.00 to 1.10; and, as shown in formula (6), the value of $R_a650/R_a550$ is in a range of 0.70 to 1.00, preferably 0.80 to 1.00, and more preferably 0.90 to 1.00. Thus, the film (a) layer shows so-called positive wavelength dispersion, which has higher retardation values at shorter wavelengths and lower retardation values at longer wavelengths, and the film (a) layer is a film layer with low wavelength dependence of the retardation value.

The thickness of film (a) layer is 10,000 nm to 200,000 nm, preferably 30,000 nm to 100,000 nm, and particularly preferably 40,000 nm to 70, 000 nm in terms of reducing the thickness of liquid crystal display.

The cyclic olefin resin forming the film (a) layer is preferably a norbornene resin composed of 30 to 100mol% of a constitutional unit represented by general formula (I) below (may be called constitutional unit (I) hereinafter) and optionally 70 to 0mol% of a constitutional unit represented by general formula (II) below (may be called constitutional unit (II) hereinafter) because such a resin gives good optical properties such as high transparency, low retardation, and uniform and stable retardation after stretching and orientation, and also has excellent high heat resistance, good adhesion or bondability to other materials and small distortion due to water absorption.

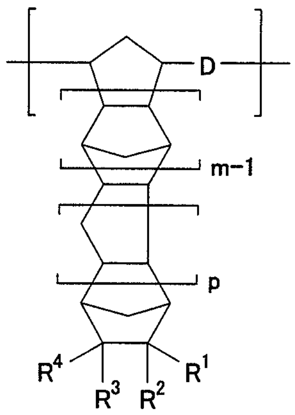

...(I)

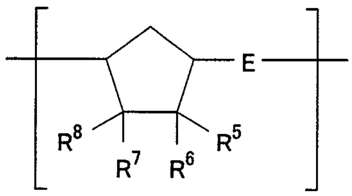

...(II)

In formula (I), m is an integer of 1 or more, and p is 0 or an integer of 1 or more.

In formulae (I) and (II), D and E are each independently a group represented by -CH=CH- or $-CH_2-CH_2-$.

Each of $R^1$ to $R^8$ independently represents a hydrogen atom; a halogen atom such as fluorine, chlorine and bromine; a substituted or unsubstituted hydrocarbon group having 1 to 30 carbon atoms that may have a linkage containing an oxygen atom, a sulfur atom, a nitrogen atom or a silicon atom; or a polar group.

The hydrocarbon group having 1 to 30 carbon atoms includes, for example, alkyl groups such as methyl, ethyl and propyl; cycloalkyl groups such as cyclopentyl and cyclohexyl; and alkenyl groups such as vinyl, allyl and propenyl. The hydrocarbon groups may bond to the ring system either directly or via a linkage.

Such linkages include divalent a hydrocarbon group having 1 to 10 carbon atoms (for example, alkylene groups represented by $-(CH_2)_l-$, wherein l is an integer of 1 to 10); linkages containing oxygen, nitrogen, sulfur or silicon atoms (for example, carbonyl (-CO-), oxycarbonyl (-O(CO)-), sulfone ($-SO_2-$), ether (-O-), thioether (-S-), imino (-NH-), amide (-NHCO-, -CONH-), siloxane bond ($-OSi(R_2)-$, wherein R is an alkyl group such as methyl and ethyl)); and others. The linkage may contain a plurality of these.

$R^1$ and $R^2$ and/or $R^3$ and $R^4$ may be unified into a divalent hydrocarbon group, either $R^1$ or $R^2$ and either $R^3$ or $R^4$ may bond to each other to form a carbocyclic or heterocyclic ring and said carbocyclic or heterocyclic ring may be monocyclic or polycyclic. $R^5$ to $R^9$ are similar to the above.

The above polar group includes hydroxyl, alkoxy having 1 to 10 carbon atoms (for example, methoxy, ethoxy, etc.), alkoxycarbonyl (for example, methoxycarbonyl, ethoxycarbonyl, etc.), aryloxycarbonyl (for example, phenoxycarbonyl, naphthyloxycarbonyl, fluorenyloxycarbonyl, biphenylyloxycarbonyl, etc.), cyano, amido, imide-ring containing groups, triorganosiloxy (for example, trimethylsiloxy, triethylsiloxy, etc.), triorganosilyl (for example, trimethylsilyl, triethylsilyl, etc.), amino (for example, primary amino, etc.), acyl, alkoxysilyl (for example, trimethoxysilyl, triethoxysilyl, etc.), sulfonyl-containing groups, carboxyl, and others.

Preferable embodiments of the above norbornene resin used in the present invention include

- a resin composed of 100mol% of constitutional unit (I),
- a resin composed of 50 to 95mol% of constitutional unit (I) and 50 to 5mol% of constitutional unit (II), wherein in formula (I), $R^1$ and $R^2$ are hydrogen atoms, $R^3$ is methyl, $R^4$ is methoxycarbonyl, m=1, and p=0; and in formula (II), each of $R^5$ to $R^8$ is a hydrogen atom or a hydrocarbon group,
- a resin composed of 50 to 95mol% of constitutional unit (I) and 50 to 5mol% of constitutional unit (II), wherein in formula (I), $R^1$ and $R^2$ are hydrogen atoms, $R^3$ is methyl, $R^4$ is methoxycarbonyl, m=1, and p=0; and in formula (II), either $R^5$ or $R^6$ and either $R^7$ or $R^8$ are hydrogen atoms, and the remaining groups of $R^5$ to $R^8$ bond to each other to form a divalent linear hydrocarbon group having 3 carbon atoms, and others.

The monomer that can form constitutional unit (I) is represented by general formula (I') below.

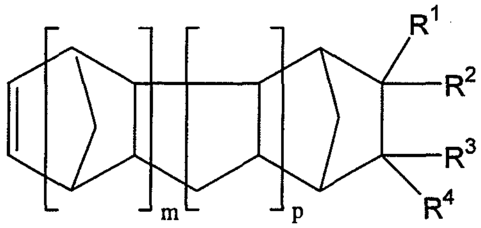
... (I')

m, p, and $R^1$ to $R^4$ in formula (I') are the same as m, p, and $R^1$ to $R^4$, respectively, in formula (I). Specific examples of such monomer (may be called monomer (I') hereinafter) are given below, but the present invention is not limited thereto. Monomers (I') below may be used singly or in combination of two or more. They are tetracyclo[4.4.0.$1^{2,5}$.$1^{7,10}$]-3-dodecene, pentacyclo[6.5.1.$1^{3,6}$.$0^{2,7}$.$0^{9,13}$]-4-pentadecene, pentacyclo[7.4.0.$1^{2,5}$.$1^{9,12}$.$0^{8,13}$]-3-pentadecene, 8-methoxycarbonyltetracyclo[4.4.0.$1^{2,5}$.$1^{7,10}$]-3-dodecene, 8-ethoxycarbonyltetracyclo[4.4.0.$1^{2,5}$.$1^{7,10}$]-3-dodecene, 8-n-propoxycarbonyltetracyclo[4.4.0.$1^{2,5}$.$1^{7,10}$]-3-dodecene, 8-isopropoxycarbonyltetracyclo[4.4.0.$1^{2,5}$.$1^{7,10}$]-3-dodecene, 8-n-butoxycarbonyltetracyclo[4.4.0.$1^{2,5}$.$1^{7,10}$]-3-dodecene, 8-phenoxycarbonyltetracyclo[4.4.0.$1^{2,5}$.$1^{7,10}$]-3-dodecene, 8-methyl-8-methoxycarbonyltetracyclo[4.4.0.$1^{2,5}$.$1^{7,10}$]-3-dode cene, 8-methyl-8-ethoxycarbonyltetracyclo[4.4.0.$1^{2,5}$.$1^{7,10}$]-3-dodec ene, 8-methyl-8-n-propoxycarbonyltetracyclo[4.4.0.$1^{2,5}$.$1^{7,10}$]-3-do decene, 8-methyl-8-isopropoxycarbonyltetracyclo[4.4.0.$1^{2,5}$.$1^{7,10}$]-3-d odecene, 8-methyl-8-n-butoxycarbonyltetracyclo[4.4.0.$1^{2,5}$.$1^{7,10}$]-3-dod ecene, 8-methyl-8-phenoxycarbonyltetracyclo[4.4.0.$1^{2,5}$.$1^{7,10}$]-3-dode cene, pentacyclo[8.4.0.$1^{2,5}$.$1^{9,12}$.$0^{8,13}$]-3-hexadecene, heptacyclo[8.7.0.$1^{3,6}$.$1^{10,17}$.$1^{12,15}$.$0^{2,7}$.$0^{11,16}$]-4-eicosene, heptacyclo[8.8.0.$1^{4,7}$.$1^{11,18}$.$1^{13,16}$.$0^{3,8}$.$0^{12,17}$]-5-heneicosene, 8-ethylidenetetracyclo[4.4.0.$1^{2,5}$.$1^{7,10}$]-3-dodecene, 8-phenyltetracyclo[4.4.0.$1^{2,5}$.$1^{7,10}$]-3-dodecene, 8-methyl-8-phenyltetracyclo[4.4.0.$1^{2,5}$.$1^{7,10}$]-3-dodecene, 8-fluorotetracyclo[4.4.0.$1^{2,5}$.$1^{7,10}$]-3-dodecene, 8-fluoromethyltetracyclo[4.4.0.$1^{2,5}$.$1^{7,10}$]-3-dodecene, 8-difluoromethyltetracyclo[4.4.0.$1^{2,5}$.$1^{7,10}$]-3-dodecene, 8-trifluoromethyltetracyclo[4.4.0.$1^{2,5}$.$1^{7,10}$]-3-dodecene, 8-pentafluoroethyltetracyclo[4.4.0.$1^{2,5}$.$1^{7,10}$]-3-dodecene, 8,8-difluorotetracyclo[4.4.0.$1^{2,5}$.$1^{7,10}$]-3-dodecene, 8,9-difluorotetracyclo[4.4.0.$1^{2,5}$.$1^{7,10}$]-3-dodecene, 8,8-bis(trifluoromethyl)tetracyclo[4.4.0.$1^{2,5}$.$1^{7,10}$]-3-dodece ne, 8,9-bis(trifluoromethyl)tetracyclo[4.4.0.$1^{2,5}$.$1^{7,10}$]-3-dodece ne, 8-methyl-8-trifluoromethyltetracyclo[4.4.0.$1^{2,5}$.$1^{7,10}$]-3-dode cene, 8,8,9-trifluorotetracyclo[4.4.0.$1^{2,5}$.$1^{7,10}$]-3-dodecene, 8,8,9-tris(trifluoromethyl)tetracyclo[4.4.0.$1^{2,5}$.$1^{7,10}$]-3-dod ecene, 8,8,9,9-tetrafluorotetracyclo[4.4.0.$1^{2,5}$.$1^{7,10}$]-3-dodecene, 8,8,9,9-tetrakis(trifluoromethyl)tetracyclo[4.4.0.$1^{2,5}$.$1^{7,10}$] -3-dodecene, 8,8-difluoro-9,9-bis(trifluoromethyl)tetracyclo[4.4.0.$1^{2,5}$.1 $^{7,10}$]-3-dodecene, 8,9-difluoro-8,9-bis(trifluoromethyl)tetracyclo[4.4.0.$1^{2,5}$.1 $^{7,10}$]-3-dodecene, 8,8,9-trifluoro-9-trifluoromethyltetracyclo[4.4.0.$1^{2,5}$.$1^{17,10}$ ]-3-dodecene, 8,8,9-trifluoro-9-trifluoromethoxytetracyclo[4.4.0.$1^{2,5}$.$1^{7,10}$ ]-3-dodecene, 8,8,9-trifluoro-9-pentafluoropropoxytetracyclo[4.4.0.$1^{2,5}$.$1^{7\ ,10}$]-3-dodecene, 8-fluoro-8-pentafluoroethyl-9,9-bis(trifluoromethyl)tetracy clo[4.4.0.$1^{2,5}$.$1^{7,10}$]-3-dodecene, 8,9-difluoro-8-heptafluoroisopropyl-9-trifluoromethyltetrac yclo[4.4.0.$1^{2,5}$.$1^{7,10}$]-3-dodecene, 8-chloro-8,9,9-trifluorotetracyclo[4.4.0.$1^{2,5}$.$1^{7,10}$]-3-dodece ne, 8,9-dichloro-8,9-bis(trifluoromethyl)tetracyclo[4.4.0.$1^{2,5}$.1 $^{7,10}$]-3-dodecene, 8-(2,2,2-trifluoroethoxycarbonyl)tetracyclo[4.4.0.$1^{2,5}$.$1^{7,10}$] -3-dodecene, 8-methyl-8-(2,2,2-trifluoroethoxycarbonyl)tetracyclo[4.4.0. $1^{2,5}$.$1^{7,10}$]-3-dodecene, and others.

Among these specific examples, 8-methyl-8-methoxycarbonyltetracyclo[4.4.0.$1^{2,5}$.$1^{7,10}$]-3-dode cene is preferred because a copolymer obtained therefrom has an increased glass transition temperature, hardly suffers from adverse effects such as distortion due to water absorption, and keeps water absorptivity enough to give good adhesion or bondability to other materials.

The monomer that can form constitutional unit (II) is represented by general formula (II') below.

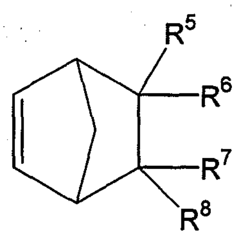

... (II')

$R^5$ to $R^8$ in formula (II' ) are the same as $R^5$ to $R^8$ in formula (II). Specific examples of these monomers (may be called monomer (II') hereinafter) are given below, but the present invention is not limited thereto. Monomers (II') below may be used singly or in combination of two or more. They are bicyclo[2.2.1]hept-2-ene, tricyclo[4.3.0.$1^{2,5}$]-3-decene, tricyclo[4.3.0.$1^{2,5}$]-deca-3,7-diene, tricyclo[4.4.0.$1^{2,5}$]-3-undecene, 5-methylbicyclo[2.2.1]hept-2-ene, 5-ethylbicyclo[2.2.1]hept-2-ene, 5-methoxycarbonylbicyclo[2.2.1]hept-2-ene, 5-methyl-5-methoxycarbonylbicyclo[2.2.1]hept-2-ene, 5-phenoxycarbonylbicyclo[2.2.1]hept-2-ene, 5-methyl-5-phenoxycarbonylbicyclo[2.2.1]hept-2-ene, 5-cyanobicyclo[2.2.1]hept-2-ene, 5-ethylidenebicyclo[2.2.1]hept-2-ene, 5-phenylbicyclo[2.2.1]hept-2-ene, 5-naphthylbicyclo[2.2.1]hept-2-ene (including both α- and β-isomers), 5-fluorobicyclo[2.2.1]hept-2-ene, 5-fluoromethylbicyclo[2.2.1]hept-2-ene, 5-trifluoromethylbicyclo[2.2.1]hept-2-ene, 5-pentafluoroethylbicyclo[2.2.1]hept-2-ene, 5,5-difluorobicyclo[2.2.1]hept-2-ene, 5,6-difluorobicyclo[2.2.1]hept-2-ene, 5,5-bis(trifluoromethyl)bicyclo[2.2.1]hept-2-ene, 5,6-bis(trifluoromethyl)bicyclo[2.2.1]hept-2-ene, 5-methyl-5-trifluoromethylbicyclo[2.2.1]hept-2-ene, 5,5,6-trifluorobicyclo[2.2.1]hept-2-ene, 5,5,6-tris(fluoromethyl)bicyclo[2.2.1]hept-2-ene, 5,5,6,6-tetrafluorobicyclo[2.2.1]hept-2-ene, 5,5,6,6-tetrakis(trifluoromethyl)bicyclo[2.2.1]hept-2-ene, 5,5-difluoro-6,6-bis(trifluoromethyl)bicyclo[2.2.1]hept-2-e ne, 5,6-difluoro-5,6-bis(trifluoromethyl)bicyclo[2.2.1]hept-2-e ne, 5,5,6-trifluoro-5-trifluoromethylbicyclo[2.2.1]hept-2-ene, 5-fluoro-5-pentafluoroethyl-6,6-bis(trifluoromethyl)bicyclo [2.2.1]hept-2-ene, 5,6-difluoro-5-heptafluoroisopropyl-6-trifluoromethylbicycl o[2.2.1]hept-2-ene, 5-chloro-5,6,6-trifluorobicyclo[2.2.1]hept-2-ene, 5,6-dichloro-5,6-bis(trifluoromethyl)bicyclo[2.2.1]hept-2-e ne, 5,5,6-trifluoro-6-trifluoromethoxybicyclo[2.2.1]hept-2-ene, 5,5,6-trifluoro-6-heptafluoropropoxybicyclo[2.2.1]hept-2-en e, 5-(4-phenylphenyl)bicyclo[2.2.1]hept-2-ene, 4-(bicyclo[2.2.1]hepta-5-en-2-yl)phenylsulfonylbenzene, and others.

As preference with respect to $R^5$ to $R^8$ in formula (II') among these monomers, preferred ones are a monomer wherein $R^5$ to $R^8$ are all hydrogen atoms, a monomer wherein one of $R^5$ to $R^8$ is a hydrocarbon group having 1 to 30 carbon atoms and the others are hydrogen atoms, and a monomer wherein any two of $R^5$ to $R^8$ are linked to each other via an alkylene group having 3 to 5 carbon atoms, because such monomers have a large improving effect on the ductility of the resultant optical films. Particularly preferred are a monomer wherein $R^5$ to $R^8$ are all hydrogen atoms, a monomer wherein any one of $R^5$ to $R^8$ is a methyl, ethyl, or phenyl group and the others are hydrogen atoms, and a monomer wherein either $R^5$ or $R^6$ is a hydrogen atom, either $R^7$ or $R^8$ is a hydrogen atom, and the rest of $R^5$ to $R^8$ bond to each other to form a divalent linear hydrocarbon group having 3 to 5 carbon atoms, considering also heat resistance. Furthermore, bicyclo[2.2.1]hept-2-ene, 5-phenylbicyclo[2.2.1]hept-2-ene, tricyclo[4.3.0.$1^{2,5}$]-3-decene, and tricyclo[4.3.0.$1^{2,5}$]-deca-3,7-diene are preferred in terms of ease in synthesis.

The norbornene resin can be obtained by ring-opening (co)polymerization of monomer (I') and optionally monomer (II') according to a publicly known method (for example, a method described in Japanese Patent Laid-open Publication No. 2003-14901). Monomers other than monomers (I') and (II'), for example, cycloolefins such as cyclobutene, cyclopentene, cycloheptene and cyclooctene may be also copolymerized. Furthermore, hydrogenated products of the ring-opened (co)polymer obtained may be also used.

The logarithmic viscosity of norbornene resin measured in chloroform (at 30°C) is 0.2 to 5 dL/g, preferably 0.3 to 4 dL/g, and particularly preferably 0.5 to 3 dL/g. When the logarithmic viscosity exceeds the above range, the processability might be worsened because of the excessively high viscosity of solution, whereas when it is below the above range, the film strength might be lowered.

For the molecular weight of norbornene resin, the number-average molecular weight (Mn), in terms of polystyrene measured by gel permeation chromatography (GPC), is generally in a range of 8, 000 to 1, 000, 000, preferably 10, 000 to 500,000, and particularly preferably 20,000 to 100,000; and the weight-average molecular weight (Mw) is generally in a range of 20,000 to 3,000,000, preferably 30,000 to 100,000, and particularly preferably 40,000 to 500,000. The molecular weight distribution represented as Mw/Mn is generally 1.5 to 10, preferably 2 to 8, and particularly preferably 2.5 to 5.

The saturated water absorption ratio at 23°C of the norbornene resin is generally 1% by weight or less, preferably 0.05 to 1% by weight, more preferably 0.1 to 0.7% by weight, and particularly preferably 0.1 to 0.5% by weight. When the saturated water absorption ratio is within such range, the resin maintains various optical properties, such as transparency, retardation and uniformity of the retardation, and dimensional accuracy even under conditions of high temperature and humidity. Furthermore, no peeling occurs during use owing to excellent adhesion or bondability to other materials, and the resin has good compatibility with additives such as an antioxidant, thereby enlarging allowable range of blending. Here, the saturated water absorption ratio refers to a value determined by measuring the weight increase of specimen after immersed in water at 23°C for one week according to ASTMD 570.

The solubility parameter (SP) value of the norbornene resin is preferably 10 to 30 $MPa^{1/2}$, more preferably 12 to 25 $MPa^{1/2}$, and particularly preferably 15 to 20 $MPa^{1/2}$. When the SP value is within the above range, the norbornene resin can be well dissolved in general-purpose solvents, enabling consistent manufacture of films with uniform properties. Further, good bondability and adhesion to substrates can be attained, and the water absorption ratio can be properly controlled.

The glass transition temperature (Tg) of the norbornene resin varies with the types and composition ratio of constitutional units (I) and (II) in the norbornene resin, presence or absence of additives, and others. It is generally 80 to 350°C, preferably 100 to 250 °C, and more preferably 120 to 200°C. When Tg is lower than the above range, the thermal distortion temperature decreases, which may cause a problem in heat resistance or may cause large temperature dependence of optical properties on resultant optical films. When Tg is higher than the above range, thermal degradation of the resin is more likely to occur when heated to a temperature near Tg in stretching or other processes.

The norbornene resin may be blended with publicly known thermoplastic resins, thermoplastic elastomers, rubbery polymers, organic fine particles, inorganic fine particles, antioxidants, ultraviolet absorbers, release agents, fire retardants, antibacterial agents, wood powder, coupling agents, petroleum resins, plasticizers, colorants, lubricants, antistatic agents, silicone oil, foaming agents, or the like so far as transparency and heat resistance are not impaired.

<Film (b)>

The film (b) layer constituting the optical film of the present invention is made of a polyimide resin or a polyetherimide resin, and preferably it satisfies formulae (7) to (10) below.

$$(7)\quad 100\ nm \leq R_bth \leq 1{,}000\ nm$$

$$(8)\quad 0 \leq R_b550 \leq 200\ nm$$

$$(9)\quad 1.00 \leq R_b450/R_b550 \leq 1.30$$

$$(10)\quad 0.7 \leq R_b650/R_b550 \leq 1.00$$

In formulae (7) to (10), $R_bth$ represents the retardation in the direction of thickness of film (b) at wavelength of 550 nm and is given by $R_bth = [(nx_b + ny_b)/2-nz_b] \times d_b$, $R_b450$, $R_b550$ and $R_b650$ represent the in-plane retardation of the film (b), $R_b$, at wavelengths of 450 nm, 550 nm and 650 nm, respectively, and $R_b$ is given by $R_b = (nx_b - ny_b) \times d_b$. Provided, however, that the sum of $R_ath$ above and $R_bth$ is 1,000 nm or less, and that the sum of $R_a550$ above and $R_b550$ is 200 nm or less. Here, $nx_b$ represents the maximum value of refractive index in directions on the film (b) plane, $ny_b$ represents the refractive index in the direction perpendicular to the axis for $nx_b$ in the film (b) plane, $nz_b$ is the refractive index in the direction of thickness of film (b) perpendicular to the axes for $nx_b$ and $ny_b$, and $d_b$ represents the thickness of film (b) in nm.

As shown in formula (7), $R_bth$ of the film (b) layer is 100 to 1,000 nm, preferably 100 to 300 nm, and more preferably 100 to 200 nm. As shown in formula (8), $R_b550$ of the film (b) layer is 0 to 200 nm, preferably 5 to 100 nm, and more preferably 10 to 30 nm.

As shown in formula (9), in film (b) layer, the value of $R_b450/ R_b550$ is in a range of 1.30 to 1.00, preferably 1.20 to 1.00, and more preferably 1.10 to 1.00, while as shown in formula (10), the value of $R_b650/ R_b550$ is in a range of 0.70 to 1.00, preferably 0.80 to 1.00, and more preferably 0.90 to 1. 00. Thus, the film (b) layer is a film with so-called positive wavelength dispersion, which has higher retardation values at shorter wavelengths and lower retardation values at longer wavelengths, and this film also shows low wavelength dependence of the retardation value.

The thickness of film (b) layer is 1,000 nm to 20,000 nm, preferably 2, 000 nm to 15,000 nm, and particularly

preferably 3,000 nm to 10, 000 nm in terms of reducing the thickness of liquid crystal displays.

The light transmittance at a wavelength of 360 nm of the film (b) layer is 10% or less, preferably 5% or less, and more preferably 1% or less. When the light transmittance at a wavelength of 360 nm is within the above range, the stability of liquid crystal members can become more durable. (Polyimide resin)

A preferred polyimide resin for forming the film (b) layer is a polyimide resin containing an alicyclic structure, preferably a polyimide having a constitutional unit represented by formula (III) below, because it has good adhesion to the film (a) layer and can provide an optical film with excellent retardation properties and light transmittance. Such polyimide resin more preferably contains, at least in parts, a biphenyl skeleton since such resin can generate desired retardation in a thin-film form.

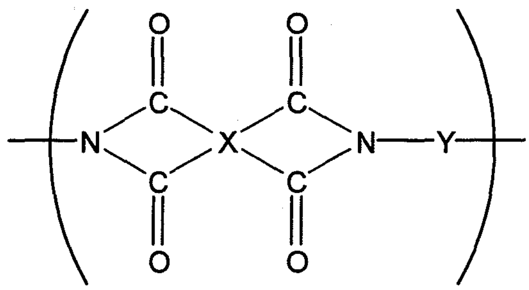

...(III)

In formula (III) , X is a tetravalent organic group having an alicyclic structure and Y is a divalent organic group.

The polyimide resin can be prepared by reaction of a tetracarboxylic dianhydride with a diamine to yield a polyamic acid, followed by imidation of the polyamic acid. The polyimide resin with an alicyclic structure can be generally obtained using a tetracarboxylic dianhydride with the alicyclic structure, whereas the polyimide resin with a biphenyl skeleton is obtained using a diamine with the biphenyl skeleton. A particularly preferred polyimide resin is a polyimide obtained by using an alicyclic structure-containing tetracarboxylic dianhydride and a biphenyl skeleton-containing diamine.

The alicyclic structure-containing tetracarboxylic dianhydride includes, for example, 1,2,3,4-cyclobutanetetracarboxylic dianhydride, 1,2-dimethyl-1,2,3,4-cyclobutanetetracarboxylic dianhydride, 1,3-dimethyl-1,2,3,4-cyclobutanetetracarboxylic dianhydride, 1,3-dichloro-1,2,3,4-cyclobutanetetracarboxylic dianhydride, 1,2,3,4-tetramethyl-1,2,3,4-cyclobutanetetracarboxylic dianhydride, 1,2,3,4-cyclopentanetetracarboxylic dianhydride, 1,2,4,5-cyclohexanetetracarboxylic dianhydride, 3,3'4,4'-dicyclohexyltetracarboxylic dianhydride, 2,3,5-tricarboxycyclopentylacetic acid dianhydride, 3,5,6-tricarboxynorbornane-2-acetic acid dianhydride, 2,3,4,5-tetrahydrofurantetracarboxylic dianhydride, 1,3,3a, 4,5,9b-hexahydro-5-(tetrahydro-2,5-dioxo-3-furanyl)n aphtho[1,2-c]furan-1,3-dione, 5-(2,5-dioxotetrahydrofuranyl)-3-methyl-3-cyclohexene-1,2-d icarboxylic anhydride, bicyclo[2.2.2]oct-7-ene-2,3,5,6-tetracarboxylic dianhydride, and the like.

For the polyimide resins used in the present invention, one may use a tetracarboxylic dianhydride other than the above alicyclic structure-containing tetracarboxylic dianhydrides as a polymerization component. Such tetracarboxylic dianhydrides include, for example, butanetetracarboxylic dianhydride, pyromellitic dianhydride, 3,3',4,4'-benzophenonetetracarboxylic dianhydride, 3,3',4,4'-biphenylsulfonetetracarboxylic dianhydride, 1,4,5,8-naphthalenetetracarboxylic dianhydride, 2,3,6,7-naphthalenetetracarboxylic dianhydride, 3,3',4,4'-tetracarboxybiphenyl ether dianhydride, 3,3',4,4'-dimethyldiphenylsilanetetracarboxylic dianhydride, 3,3',4,4'-tetraphenylsilanetetracarboxylic dianhydride, 1,2,3,4-furantetracarboxylic dianhydride, 4,4'-bis(3,4-dicarboxyphenoxy)diphenyl sulfide dianhydride, 4,4'-bis(3,4-dicarboxyphenoxy)diphenyl sulfone dianhydride, 4,4'-bis(3,4-dicarboxyphenoxy)diphenylpropane dianhydride, 3,3',4,4'-perfluoroisopropylidenedi(phthalic anhydride), 3,3',4,4'-biphenyltetracarboxylic dianhydride, bis(phthalic anhydride)phenylphosphine oxide, p-phenylenebis(triphenylphthalic anhydride), m-phenylenebis(triphenylphthalic anhydride), bis(triphenylphthalic anhydride)-4,4'-diphenyl ether, bis(triphenylphthalic anhydride)-4,4'-diphenylmethane, ethylene glycol bis(anhydrotrimellitate), propylene glycol bis(anhydrotrimellitate), 1,4-butanediol bis(anhydrotrimellitate), 1,6-hexanediol bis (anhydrotrimellitate), 1,8-octanediol bis(anhydrotrimellitate), 2,2-bis(4-hydroxyphenyl)propane bis(anhydrotrimellitate), and others.

The above tetracarboxylic dianhydrides may be used singly or in combination of two or more. The ratio of the alicyclic structure-containing tetracarboxylic dianhydride in the total amount of tetracarboxylic dianhydrides is preferably 50mol% or more, more preferably 70mol% or more, further more preferably 90mol% or more, and most preferably 100mol% because resins with such ratios can form a film (b) layer having good adhesion to the film (a) layer and also provide optical films having excellent retardation properties and high light transmittance.

The above biphenyl skeleton-containing diamine includes, for example, 3,3'-dimethyl-4,4'diaminobiphenyl, 2,2'-dimethyl-4,4'-diaminobiphenyl, 4,4'-bis(4-aminophenoxy)biphenyl, and the like.

Diamines other than the biphenyl skeleton-containing diamines include, for example,

aromatic diamines such as p-phenylenediamine, m-phenylenediamine, 4,4'-diaminodiphenylmethane, 4,4'-diaminodiphenylethane, 4,4'-diaminodiphenyl sulfide, 4,4'-diaminodiphenyl sulfone, 4,4'-diaminobenzanilide, 4,4'-diaminodiphenyl ether, 1,5-diaminonaphthalene, 5-amino-1-(4'-aminophenyl)-1,3,3-trimethylindane, 6-amino-1-(4'aminophenyl)-1,3,3-trimethylindane, 3,4'-diaminodiphenyl ether, 3,3'-diaminobenzophenone, 3,4'-diaminobenzophenone, 4,4'-diaminobenzophenone, 2,2-bis[4-(4-aminophenoxy)phenyl]propane, 2,2-bis[4-(4-aminophenoxy)phenyl]hexafluoropropane, 2,2-bis(4-aminophenyl)hexafluoropropane, 2,2-bis[4-(4-aminophenoxy)phenyl] sulfone, 1,4-bis(4-aminophenoxy) benzene, 1,3-bis(4-aminophenoxy)benzene, 1,3-bis(3-aminophenoxy)benzene, 9,9-bis(4-aminophenyl)-10-hydroanthracene, 2,7-diaminofluorene, 9,9-bis(4-aminophenyl)fluorene, 4,4'-methylenebis(2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-(p-phenyleneisopropylidene)bisaniline, 4,4'-(m-phenyleneisopropylidene)bisaniline, 2,2'-bis[4-(4-amino-2-trifluoromethylphenoxy)phenyl]hexaflu oropropane, 4,4'-diamino-2,2'-bis(trifluoromethyl)biphenyl, and 4,4'-bis[(4-amino-2-trifluoromethyl)phenoxy]octafluorobiphe nyl;

aliphatic or alicyclic diamines such as 1,1-m-xylylenediamine, 1,3-propanediamine, tetramethylenediamine, pentamethylenediamine, hexamethylenediamine, heptamethylenediamine, octamethylenediamine, nonamethylenediamine, 4,4-diaminoheptamethylenediamine, 1,4-cyclohexanediamine, isophoronediamine, tetrahydrodicyclopentadienylenediamine, hexahydro-4,7-methanoindanylenedimethylenediamine, tricyclo[6.2.1.0$^{2,7}$]undecylenedimethyldiamine and 4,4'-methylenebis(cyclohexylamine);

diamines with two primary amino groups and a nitrogen atom other than said primary amino group within a molecule such as 2,3-diaminopyridine, 2,6-diaminopyridine, 3,4-diaminopyridine, 2,4-diaminopyrimidine, 5,6-diamino-2,3-dicyanopyrazine, 5,6-diamino-2,4-dihydroxypyrimidine, 2,4-diamino-6-dimethylamino-1,3,5-triazine, 1,4-bis(3-aminopropyl) piperazine, 2,4-diamino-6-isopropoxy-1,3,5-triazine, 2,4-diamino-6-methoxy-1,3,5-triazine, 2,4-diamino-6-phenyl-1,3,5-triazine, 2,4-diamino-6-methyl-s-triazine, 2,4-diamino-1,3,5-triazine, 4,6-diamino-2-vinyl-s-triazine, 2,4-diamino-5-phenylthiazole, 2,6-diaminopurine, 5,6-diamino-1,3-dimethyluracil, 3,5-diamino-1,2,4-triazole, 6,9-diamino-2-ethoxyacridine lactate, 3,8-diamino-6-phenylphenanthridine, 1,4-diaminopiperazine, 3,6-diaminoacridine, bis(4-aminophenyl)phenylamine, and compounds represented by formulae (i) and (ii) below,

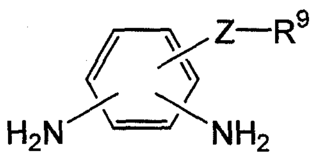

... (i)

(In formula (i), $R^9$ represents a monovalent organic group with a nitrogen atom-containing ring structure selected from pyridine, pyrimidine, triazine, piperidine and piperazine; and Z represents a divalent organic group.),

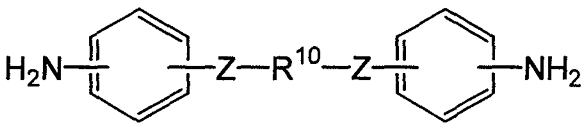

... (ii)

(In formula (ii), $R^{10}$ represents a divalent organic group with a nitrogen atom-containing ring structure selected from pyridine, pyrimidine, triazine, piperidine and piperazine; and Z represents a divalent organic group, wherein a plurality of Zs may be the same or different.);

mono-substituted phenylenediamines represented by formula (iii) below,

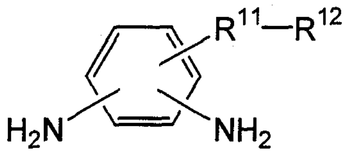

...(iii)

(In formula (iii), $R^{11}$ represents a divalent organic group selected from -O-, -COO-, -OCO-, -NHCO-, -CONH- and -CO-; and $R^{12}$ represents a monovalent organic group with a steroid skeleton, a monovalent organic group with a trifluoromethyl group or a fluorine atom, or an alkyl group having 6 to 30 carbon atoms.);
diaminoorganosiloxanes represented by formula (iv) below,

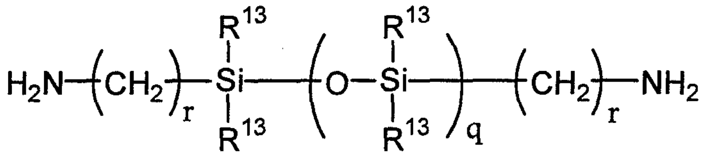

...(iv)

(In formula (iv), $R^{13}$ each independently represents a hydrocarbon group having 1 to 12 carbon atoms, q is an integer of 1 to 20, and r is an integer of 1 to 3.);
compounds represented by formulae (v) to (ix) below,

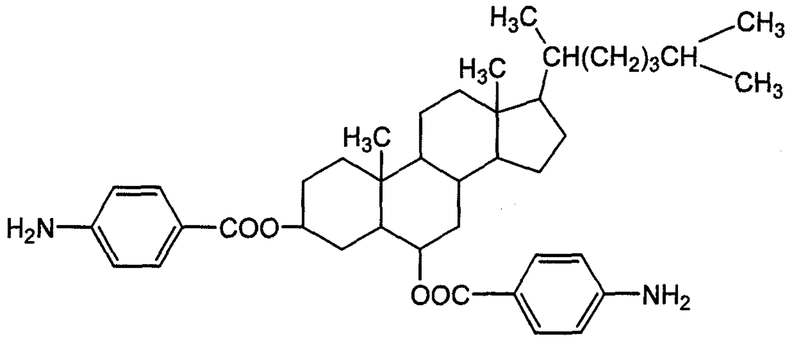

...(v)

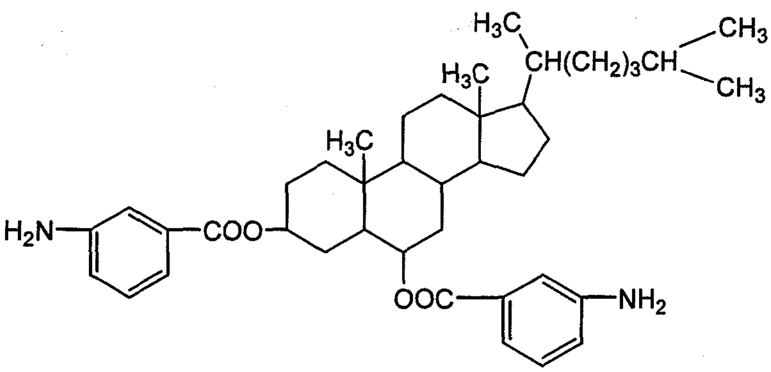

...(vi)

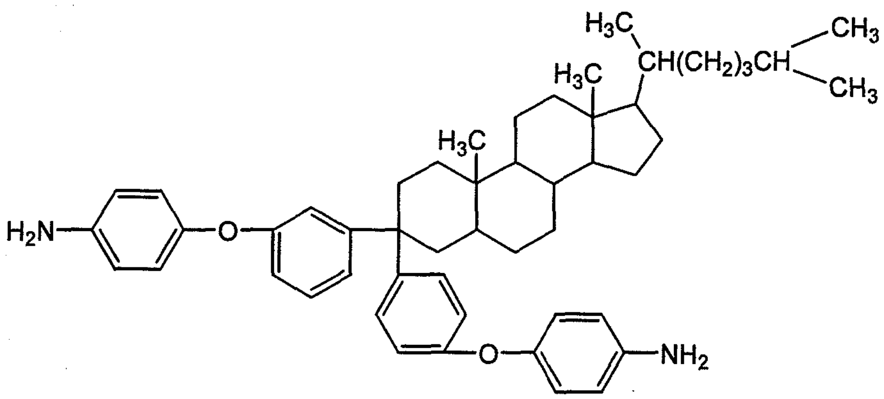

...(vii)

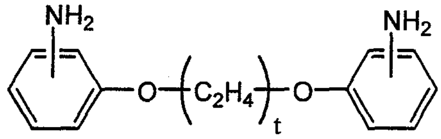

...(viii)

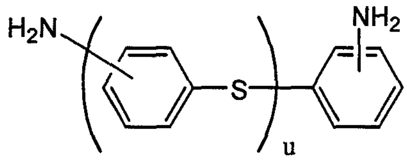

...(ix)

(In the above formulae, t is an integer of 2 to 12 and u is an integer of 1 to 5.); and others.

The above diamines may be used singly or in combination of two or more. Among these, preferred are the above-described biphenyl skeleton-containing diamines, p-phenylenediamine, 4,4'-diaminodiphenylmethane, 4,4'-diaminodiphenyl sulfide, 1,5-diaminonaphthalene, 2,7-diaminofluorene, 4,4'-diaminodiphenyl ether, 2,2-bis[4-(4-aminophenoxy)phenyl]propane, 9,9-bis(4-aminophenyl)fluorene, 2,2-bis[4-(4-aminophenoxy)phenyl]hexafluoropropane, 2,2-bis(4-aminophenyl)hexafluoropropane, 4,4'-(p-phenylenediisopropylidene)bisaniline, 4,4'-(m-phenylenediisopropylidene)bisaniline, 1,4-cyclohexanediamine, 4,4'-methylenebis(cyclohexylamine), 1,4-bis(4-aminophenoxy)benzene, compounds represented by formulae (v) to (ix), 2,6-diaminopyridine, 3,4-diaminopyridine, 2,4-diaminopyrimidine, 3,6-diaminoacridine, compound represented by formula (i-1) below, which belongs to the compounds represented by formula (i), compound represented by formula (ii-1) below, which belongs to the compounds represented by formula (ii), and compounds represented by formulae (iii-1) to (iii-6) below which belong to the compounds represented by formula (iii).

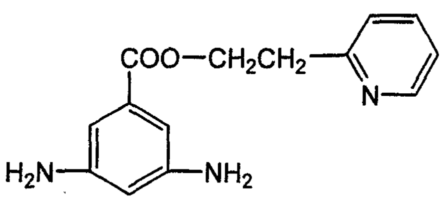

...(i-1)

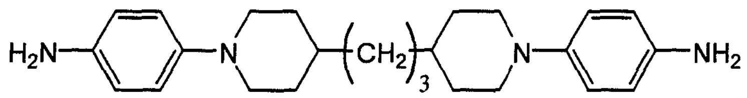

...(ii-1)

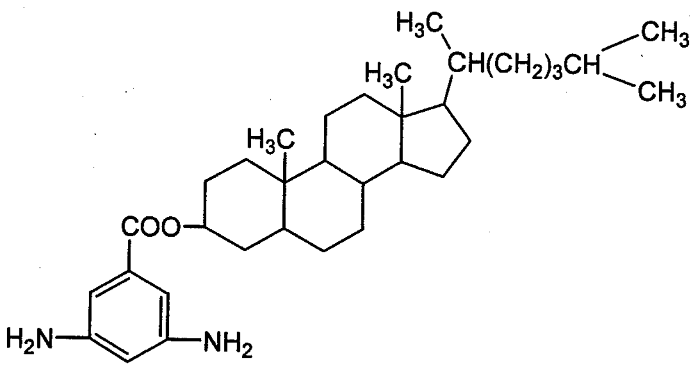

...(iii-1)

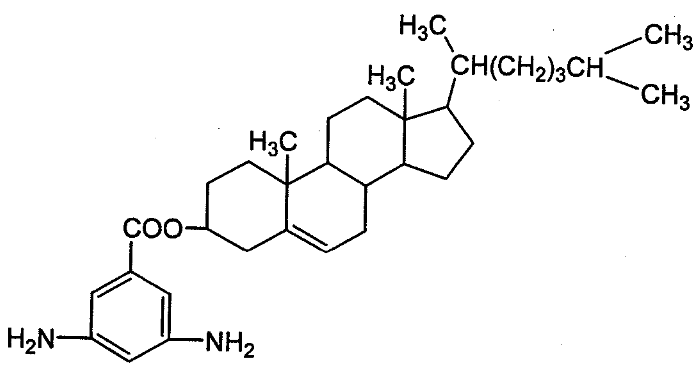

...(iii-2)

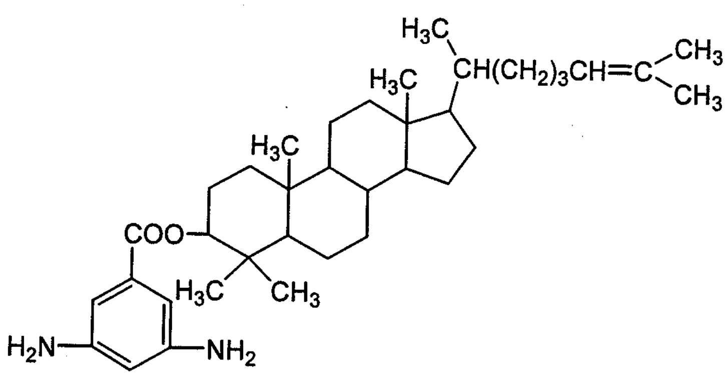

...(iii-3)

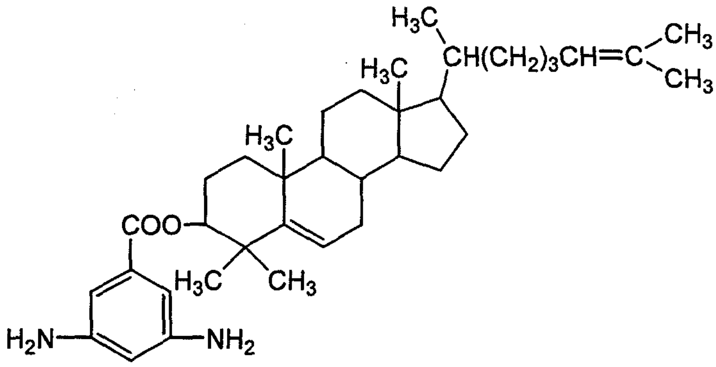

...(iii-4)

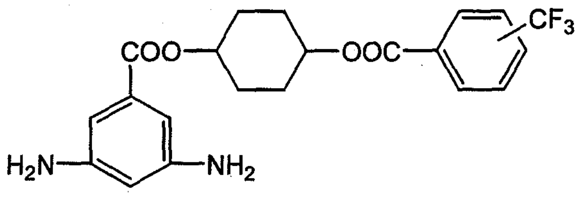

...(iii-5)

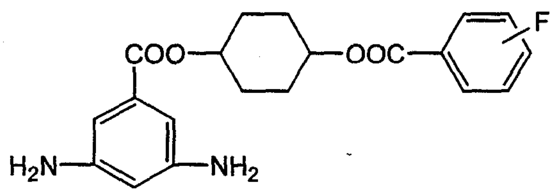

...(iii-6)

Reaction of a tetracarboxylic dianhydride with a diamine is carried out, at a ratio of 0.2 to 2 equivalents, more preferably 0.3 to 1.4 equivalents of anhydride groups in the tetracarboxylic dianhydride with respect to one equivalent of amino groups in the diamine, in an organic solvent at generally 0 to 150°C, preferably 0 to 100°C. Reaction under such conditions yields a polyamic acid with sufficiently high molecular weight.

The above organic solvent is not particularly limited so far as it can dissolve the tetracarboxylic dianhydride and the diamine used as reactants and the polyamic acid formed as the polymeric product. Specifically, there may used aprotic polar solvents such as γ-butyrolactone, N-methyl-2-pyrrolidone, N,N-dimethylformamide, N,N-dimethylacetamide, dimethyl sulfoxide, tetramethylurea and hexamethylphosphoramide; and phenolic solvents such as m-cresol, xylenol, phenol and halogenated phenols; and the like.

The organic solvent is preferably used in such an amount that the total amount of the tetracarboxylic dianhydride and the diamine used as reactants is 0.1 to 30% by weight of the total amount of reaction solution. As the organic solvent, there may be concomitantly used alcohols, ketones, esters, ethers, halogenated hydrocarbons, hydrocarbons, or the like, which are poor solvents for the polyamic acid to be formed, as long as the resultant polyamic acid is not precipitated.

Imidation of the polyamic acid thus obtained is carried out by heating or by treating with a dehydrating agent and an imidation catalyst so that dehydration and ring-closure proceed to yield the polyimide. The temperature in thermal imidation is generally 60 to 250°C, and preferably 100 to 170°C. Imidation at a temperature in such range can yield an imide polymer with a sufficiently high molecular weight.

As the dehydrating agents, there may be used, for example, acetic anhydride, propionic anhydride, trifluoroacetic

anhydride, and the like. The amount of such dehydrating agents is preferably 1.6 to 20 moles per mole of repeating units of the polyamic acid.

Examples of the imidation catalyst used here includes tertiary amines such as pyridine, collidine, lutidine and triethylamine, but is not limited thereto. Such imidation catalyst is preferably used in an amount of 0.5 to 10 mole per mole of the dehydrating agent used. The organic solvent used in the imidation includes the organic solvents listed for use in synthesis of the polyamic acid. In this imidation, the reaction temperature is generally 0 to 180°C, and preferably 60 to 150°C.

The polyimide resin used in the present invention may be a partly imidated polymer in which the polyamic acid is not completely imidated, but the percentage imidation is preferably 50% or more, more preferably 80% or more, particularly preferably 90% or more, and most preferably 95% or more. When the percentage imidation is within the above range, coating workability is excellent and the retardation can be readily controlled in forming a film (b) layer, which are preferred points.

The value of logarithmic viscosity of the polyimide thus obtained is generally 0.05 to 10 dL/g, and preferably 0.05 to 5 dL/g. Here, the value of logarithmic viscosity is the one measured at 30°C in a solution using N-methyl-2-pyridone as a solvent at a polymer concentration of 0.5 g/100 mL.

(Polyetherimide resin)

The polyetherimide resin forming the film (b) layer is preferably a polyetherimide resin containing a constitutional unit represented by general formula (IV) below (may be called "polyetherimide (IV)" hereinafter) since it exhibits good adhesion to the film (a) layer and provides optical films with excellent retardation properties and light transmittance.

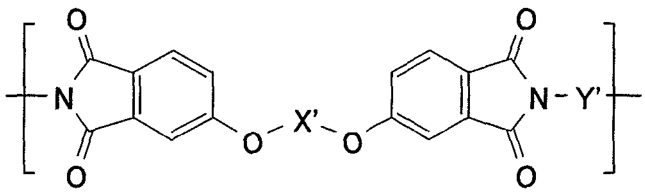

... (IV)

In formula (IV) , X' and Y' may be identical to or different from each other and each represents a saturated or unsaturated hydrocarbon group.

Polyetherimide (IV) is preferably a polyetherimide resin with the constitutional unit represented by formula (V) below since it gives particularly excellent properties.

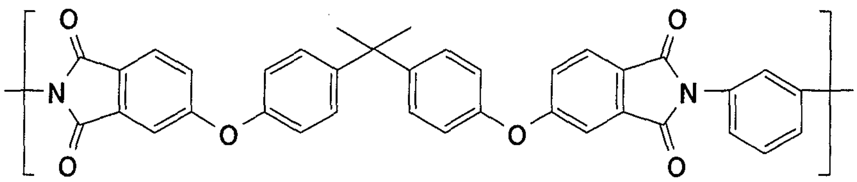

... (V)

Polyetherimide (IV) can be obtained by reaction of an ether bond-containing tetracarboxylic dianhydride represented by general formula (VI) below (may be called "compound VI" hereinafter) with a diamine to synthesize a polyamic acid, followed by imidation of the polyamic acid.

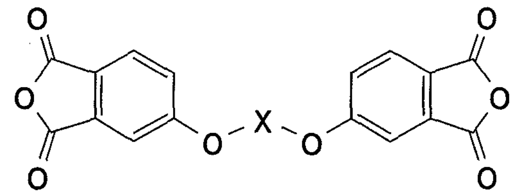

... (VI)

In formula (VI) , X' is the same as X' in formula (IV) and includes, for example, $-CH_2-$, $-C_2H_4-$, groups represented

by formulae below, and others.

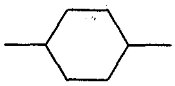 , 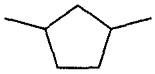 , 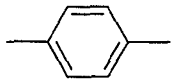 , 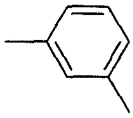 ,

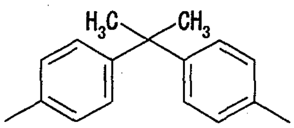 , 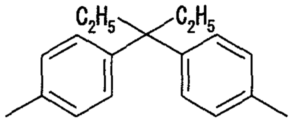 , 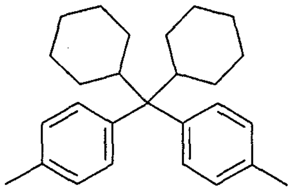 ,

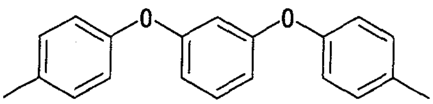 , 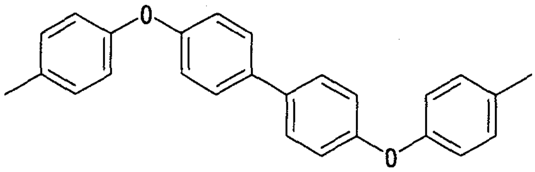 ,

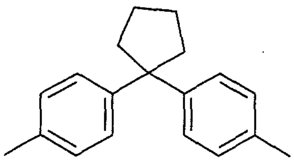 , 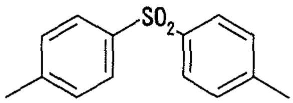

As the acid dianhydride, compound (VI) may be used singly or in combination of two or more.

In synthesizing polyetherimide (IV), one may also use acid dianhydrides other than compound (VI) as a polymerization component. Compound (VI) is used at a ratio of 50mol% or more, preferably 70mol% or more, more preferably 90mol% or more, and particularly preferably 100mol%, provided the total amount of acid dianhydrides to be used is 100mol%. When the ratio of compound (VI) is within the above range, the resultant polymer has good adhesion to the film (a) layer and can provide optical films with excellent retardation properties and light transmittance.

The acid dianhydrides other than compound (VI) include, for example, butanetetracarboxylic dianhydride, 1,2,3,4-cyclobutanetetracarboxylic dianhydride, 1,2-dimethyl-1,2,3,4-cyclobutanetetracarboxylic dianhydride, 1,3-dimethyl-1,2,3,4-cyclobutanetetracarboxylic dianhydride, 1,3-dichloro-1,2,3,4-cyclobutanetetracarboxylic dianhydride, 1,2,3,4-tetramethyl-1,2,3,4-cyclobutanetetracarboxylic dianhydride, 1,2,3,4-cyclopentanetetracarboxylic dianhydride, 1,2,4,5-cyclohexanetetracarboxylic dianhydride, 3,3',4,4'-dicyclohexyltetracarboxylic dianhydride, 2,3,5-tricarboxycyclopentylacetic acid dianhydride, 3,5,6-tricarboxynorbornane-2-acetic acid dianhydride, 2,3,4,5-tetrahydrofurantetracarboxylic dianhydride, 1,3,3a,4,5,9b-hexahydro-5-(tetrahydro-2,5-dioxo-3-furanyl)n aphtho[1,2-c]furan-1,3-dione, 5-(2,5-dioxotetrahydrofuranyl)-3-methyl-3-cyclohexene-1,2-d icarboxylic anhydride, bicyclo[2.2.2]oct-7-ene-2,3,5,6-tetracarboxylic dianhydride, pyromellitic dianhydride, 3,3'4,4'-benzophenonetetracarboxylic dianhydride, 3,3'4,4'-biphenylsulfonetetracarboxylic dianhydride, 1,4,5,8-naphthalenetetracarboxylic dianhydride, 2,3,6,7-naphthalenetetracarboxylic dianhydride, 3,3',4,4'-biphenyl ether tetracarboxylic dianhydride, 3,3'4,4'-perfluoroisopropylidenedi(phthalic anhydride), 3,3'4,4'-biphenyltetracarboxylic dianhydride, bis(phthalic anhydride)phenylphosphine oxide, p-phenylenebis(triphenylphthalic anhydride), m-phenylenebis(triphenylphthalic anhydride), bis(triphenylphthalic anhydride)-4,4'-diphenylmethane, ethylene glycol bis(anhydrotrimellitate), propylene glycol bis(anhydrotrimellitate), 1,4-butanediol bis(anhydrotrimellitate), 1,6-hexanediol bis(anhydrotrimellitate), 1,8-octanediol bis(anhydrotrimellitate), 2,2-bis(4-hydroxyphenyl)propane bis(anhydrotrimellitate), and the like.

The diamine used for synthesis of polyetherimide (IV), although is not particularly limited to, includes for example aromatic diamines such as p-phenylenediamine, m-phenylenediamine, 4,4'-diaminodiphenylmethane, 4,4'-diaminodiphenylethane, 4,4'-diaminodiphenyl sulfide, 4,4'-diaminodiphenyl sulfone, 3,3'-dimethyl-4,4'-diaminobiphenyl, 2,2'-dimethyl-4,4'-diaminobiphenyl, 4,4'-bis(4-aminophenoxy)biphenyl, 4,4'-diaminobenzanilide, 4,4'-diaminodiphenyl ether, 1,5-diaminonaphthalene, 5-amino-1-(4'-aminophenyl)-1,3,3-trimethylindane, 6-amino-1-(4'aminophenyl)-1,3,3-trimethylindane, 3,4'-diaminodiphenyl ether, 3,3'-diaminobenzophenone, 3,4'-diaminobenzophenone, 4,4'-diaminobenzophenone, 2,2-bis[4-(4-aminophenoxy)phenyl]propane, 2,2-bis[4-(4-aminophenoxy)phenyl]hexafluoropropane, 2,2-bis(4-aminophenyl)hexafluoropropane, 2,2-bis[4-(4-aminophenoxy)phenyl] sulfone, 1,4-bis(4-aminophenoxy)benzene, 1,3-bis(4-aminophenoxy)benzene, 1,3-bis(3-aminophenoxy)benzene, 9,9-bis(4-aminophenyl)-10-hydroanthracene, 2,7-diaminofluorene, 9,9-bis(4-aminophenyl)fluorene, 4,4'-methylenebis(2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-(p-phenyleneisopropylidene)bisaniline, 4,4'-(m-phenyleneisopropylidene)bisaniline, 2,2'-bis[4-(4-amino-2-trifluoromethylphenoxy)phenyl]hexaflu oropropane, 4,4'-diamino-2,2'-bis(trifluoromethyl)biphenyl, and 4,4'-bis[(4-amino-2-trifluoromethyl)phenoxy] octafluorobiphe nyl;

aliphatic or alicyclic diamines such as 1,1-m-xylylenediamine, 1,3-propanediamine, tetramethylenediamine, pentamethylenediamine, hexamethylenediamine, heptamethylenediamine, octamethylenediamine, nonamethylenediamine, 4,4-diaminoheptamethylenediamine, 1,4-cyclohexanediamine, isophoronediamine, tetrahydrodicyclopentadienylenediamine, hexahydro-4,7-methanoindanylenedimethylenediamine, tricyclo[6.2.1.$0^{2,7}$]undecylenedimethyldiamine, and 4,4'-methylenebis(cyclohexylamine);

diamines with two primary amino groups and a nitrogen atom other than said primary amino groups within a molecule such as 2,3-diaminopyridine, 2,6-diaminopyridine, 3,4-diaminopyridine, 2,4-diaminopyrimidine, 5,6-diamino-2,3-dicyanopyrazine, 5,6-diamino-2,4-dihydroxypyrimidine, 2,4-diamino-6-dimethylamino-1,3,5-triazine, 1,4-bis(3-aminopropyl) piperazine, 2,4-diamino-6-isopropoxy-1,3,5-trizaine, 2,4-diamino-6-methoxy-1,3,5-triazine, 2,4-diamino-6-phenyl-1,3,5-triazine, 2,4-diamino-6-methyl-s-triazine, 2,4-diamino-1,3,5-triazine, 4,6-diamino-2-vinyl-s-triazine, 2,4-diamino-5-phenylthiazole, 2,6-diaminopurine, 5,6-diamino-1,3-dimethyluracil, 3,5-diamino-1,2,4-triazole, 6,9-diamino-2-ethoxyacridine lactate, 3,8-diamino-6-phenylphenanthridine, 1,4-diaminopiperazine, 3,6-diaminoacridine, bis(4-aminophenyl)phenylamine, and the compounds represented by the formulae (i) and (ii);

monosubstituted phenylenediamines represented by formula (iii);

diaminoorganosiloxanes represented by the formula (iv);

the compounds represented by the formulae (v) to (ix), and others.

The above diamines may be used singly or in combination of two or more. Among them, preferred are p-phenylenediamine, 4,4'-diaminodiphenylmethane, 4,4'-diaminodiphenyl sulfide, 1,5-diaminonaphthalene, 2,7-diaminofluorene, 4,4'diaminodiphenyl ether, 2,2-bis[4-(4-aminophenoxy)phenyl]propane, 9,9-bis(4-aminophenyl)fluorene, 2,2-bis[4-(4-aminophenoxy)phenyl]hexafluoropropane, 2,2-bis(4-aminophenyl)hexafluoropropane, 4,4'-(p-phenylenediisopropylidene)bisaniline, 4,4'-(m-phenylenediisopropylidene)bisaniline, 1,4-cyclohexanediamine, 4,4'-methylenebis(cyclohexylamine), 1,4-bis(4-aminophenoxy)benzene, 2,2'-dimethyl-4,4'-diaminobiphenyl, 4,4'-bis(4-aminophenoxy)biphenyl, the compounds represented by the formulae (v) to (ix), 2,6-diaminopyridine, 3,4-diaminopyridine, 2,4-diaminopyrimidine, 3,6-diaminoacridine, the compound represented by the formula (i-1), which belongs to the compounds represented by the formula (i), the compound represented by the formula (ii-1), which belongs to the compounds represented by the formula (ii), and the compounds represented by the formulae (iii-1) to (iii-6), which belong to the compounds represented by the formula (iii).

Polyetherimide (IV) is synthesized, for example, by reaction of compound (VI) with a diamine, at a ratio of 0.4 to 2.3 equivalents, preferably 0.5 to 1.9 equivalents, and more preferably 0.7 to 1.5 equivalents of acid anhydride groups in compound (VI) per equivalent of amino groups in the diamine, in an organic solvent at a temperature of generally 0 to 150°C, preferably 0 to 100°C. The reaction under such conditions yields a polyamic acid with sufficient high molecular weight.

The organic solvent is not particularly limited so far as it can dissolve compound (VI) and the diamine used as reactants and the polyamic acid to be formed as a polymeric product. Specifically, solvents used here include aprotic polar solvents such as γ-butyrolactone, N-methyl-2-pyrrolidone, N,N-dimethylformamide, N,N-dimethylacetamide, dimethyl sulfoxide, tetramethylurea and hexamethylphosphoramide; phenolic solvents such as m-cresol, xylenol, phenol and halogenated phenols; and the like.

The organic solvent is preferably used in such an amount that the total amount of compound (VI) and the diamine, which are the reactants, is 0.1 to 30% by weight of the total amount of reaction solution. As the organic solvent, there may be concomitantly used alcohols, ketones, esters, ethers, halogenated hydrocarbons, hydrocarbons, or the like, which are poor solvents for the polyamic acid to be formed, as long as the resultant polyamic acid is not precipitated.

Imidation of the polyamic acid thus obtained is performed by heating or treating with a dehydrating agent and an imidation catalyst so that dehydration and ring-closure proceed to yield polyetherimide (IV). The temperature in thermal imidation is generally 60 to 250°C, and preferably 100 to 170°C. Imidation at such temperature can yield polyetherimide (IV) with a sufficiently high molecular weight.

Polyetherimide (IV) may be a partly imidated polymer in which the polyamic acid is not completely imidated,

but the percentage imidation is preferably 50% or more, more preferably 80% or more, particularly preferably 90% or more, and most preferably 95% or more. When the percentage imidation is within the above range, the resin has good coating workability and the retardation is readily controlled in forming the film (b) , which are preferred points.

As the dehydrating agents, there may be used, for example, acetic anhydride, propionic anhydride, trifluoroacetic anhydride, and the like. Such dehydrating agents are preferably used in an amount of 1.6 to 20 moles per mole of repeating units in the polyamic acid.

The imidation catalyst used here includes, for example, tertiary amines such as pyridine, collidine, lutidine and triethylamine, but is not limited thereto. The ratio of such imidation catalyst to be used is preferably 0.5 to 10 mol per mole of the dehydrating agent used. The organic solvent used in such imidation includes the organic solvents listed for use in synthesis of the polyamic acid. In such imidation, the temperature is generally 0 to 180°C, and preferably 60 to 150°C.

The value of logarithmic viscosity of polyetherimide (IV) thus obtained is generally 0. 05 to 10 dL/g, and preferably 0.05 to 5 dL/g. Here, the value of logarithmic viscosity is the one measured at 30°C in a solution using N-methyl-2-pyridone as a solvent in a polymer concentration of 0.5 g/100 mL.

<Method for manufacturing optical film>

The optical film of the present invention can be manufactured by forming a film (b) layer made of the above polyimide resin or the above polyetherimide resin, by coating, on film (a) that is made of the above cyclic olefin resin and obtained by uniaxial or biaxial stretching so as to exhibit specific optical properties.

Alternatively, the optical film of the present invention can be also manufactured by a method in which an unstretched resin film made of the cyclic olefin resin is coated with the polyimide resin or the polyetherimide resin to form a layer of resin film (b), thereby producing a laminated film, and the laminated film is then uniaxially or biaxially stretched.

(Primer (c) layer)

The optical film of the present invention may have at least one layer of acrylic and/or urethane primer (c) layer between the film (a) layer and the film (b) layer.

The thickness of primer (c) layer is not particularly limited, but preferably in a range of 0.01 to 10 μm, and more preferably 0.1 to 3 μm. When the thickness is smaller than the above range, adhesion between the film (a) layer and the film (b) layer might decrease. When the thickness is larger than the above range, workability in film formation might be lowered.

(i) Acrylic primer layer

The acrylic polymer forming the acrylic primer layer is not particularly limited so far as it is a polymer having a monomer unit derived from an acrylate having at least one (meth)acryloyl group in a molecule. Such acrylates include, for example, monofunctional (meth)acrylates and multifunctional (meth) acrylates. Among them, multifunctional (meth) acrylates are preferred because they can enhance the reactivity of composition for retardation films.

Specific examples of the monofunctional (meth)acrylate include
alkyl (meth)acrylates such as methyl (meth)acrylate, ethyl (meth)acrylate, propyl (meth)acrylate, isopropyl (meth) acrylate, butyl (meth) acrylate, isobutyl (meth) acrylate, tert-butyl (meth)acrylate, pentyl (meth)acrylate, amyl (meth) acrylate, isoamyl (meth) acrylate, hexyl (meth) acrylate, heptyl (meth)acrylate, octyl (meth)acrylate, isooctyl (meth)acrylate, 2-ethylhexyl (meth)acrylate, nonyl (meth) acrylate, decyl (meth)acrylate, isodecyl (meth)acrylate, undecyl (meth)acrylate, dodecyl (meth)acrylate, lauryl (meth)acrylate, stearyl (meth)acrylate and isostearyl (meth)acrylate;
hydroxyalkyl (meth)acrylates such as hydroxyethyl (meth)acrylate, hydroxypropyl (meth)acrylate and hydroxybutyl (meth) acrylate;
phenoxyalkyl (meth)acrylates such as phenoxyethyl (meth)acrylate and 2-hydroxy-3-phenoxylpropyl (meth)acrylate;
alkoxyalkyl (meth)acrylates such as methoxyethyl (meth)acrylate, ethoxyethyl (meth)acrylate, propoxyethyl (meth)acrylate, butoxyethyl (meth)acrylate and methoxybutyl (meth)acrylate;
polyethylene glycol (meth) acrylates such as polyethylene glycol mono(meth)acrylate, ethoxydiethylene glycol (meth) acrylate, methoxypolyethylene glycol (meth)acrylate, phenoxypolyethylene glycol (meth)acrylate and nonylphenoxypolyethylene glycol (meth)acrylate;
polypropylene glycol (meth)acrylates such as polypropylene glycol mono(meth)acrylate, methoxypolypropylene glycol (meth)acrylate, ethoxypolypropylene glycol (meth)acrylate and nonylphenoxypolypropylene glycol (meth)acrylate;
cycloalkyl (meth)acrylates such as cyclohexyl (meth)acrylate, 4-butylcyclohexyl (meth)acrylate, dicyclopentanyl (meth) acrylate, dicyclopentenyl (meth)acrylate, dicyclopentadienyl (meth)acrylate, bornyl (meth)acrylate, isobornyl (meth)acrylate and tricyclodecanyl (meth)acrylate;
benzyl (meth)acrylate, tetrahydrofurfuryl (meth)acrylate, and the like. Such monofunctional (meth) acrylates may be used singly or in combination of two or more.

Specific examples of the multifunctional (meth)acrylate include
alkylene glycol di(meth)acrylates such as ethylene glycol di(meth)acrylate, diethylene glycol di(meth)acrylate, tetraethylene glycol di(meth)acrylate, polyethylene glycol di(meth)acrylate, 1,4-butanediol di(meth)acrylate, 1,6-hexanediol di (meth)acrylate and neopentyl glycol di(meth)acrylate;
poly(meth)acrylates of polyols such as trimethylolpropane tri(meth)acrylate, trimethylolpropanetrihydroxyethyl tri(meth) acrylate, ditrimethylolpropane tetra(meth)acrylate, pentaerythritol tri(meth)acrylate, pentaerythritol tetra(meth)acrylate, dipentaerythritol hexa(meth)acrylate and neopentyl glycol hydroxypivalate di(meth)acrylate;
poly(meth)acrylates of isocyanurate such as isocyanurate tri(meth)acrylate, tris(2-hydroxyethyl)isocyanurate di(meth) acrylate and tris(2-hydroxyethyl)isocyanurate tri(meth)acrylate;
poly(meth)acrylate derivatives of cycloalkanes such as tricyclodecanediyldimethyl di(meth)acrylate;
(meth)acrylate derivatives of bisphenol A such as di(meth)acrylate of bisphenol A-ethylene oxide adduct, di(meth)acrylate of bisphenol A-propylene oxide adduct, di(meth)acrylate of bisphenol A-alkylene oxide adduct, di(meth)acrylate of hydrogenated bisphenol A-ethylene oxide adduct, di(meth)acrylate of hydrogenated bisphenol A-propylene oxide adduct, di(meth)acrylate of hydrogenated bisphenol A-alkylene oxide adduct, and a (meth)acrylate obtained from bisphenol A glycidyl ether and (meth)acrylic acid;
fluorine-containing (meth)acrylates such as 3,3,4,4,5,5,6,6-octafluorooctane di(meth)acrylate, 3-(2-perfluorohexyl) ethoxy-1,2-di(meth)acryloylpropane, and N-(n-propyl)-N-(2,3-di(meth)acryloylpropyl)perfluorooctanes ulfonamide; and others. Such multifunctional (meth) acrylates may be used singly or in combination of two or more.

Among such polyfunctional (meth) acrylates, particularly preferred are polyfunctional (meth)acrylate compounds with a large number of acryloyl groups within a molecule such as dipentaerythritol hexaacrylate, pentaerythritol teraacrylate, pentaerythritol triacrylate and trimethylolpropane triacrylate because higher crosslinking density and higher film strength are obtained.

In the present invention, a heat-induced radical generator or a light-induced radical generator may be used in curing the acrylates. A light-induced radical generator is preferably used in terms of storage stability and productivity.

Specific examples of the light-induced radical generator include 1-hydroxycyclohexyl phenyl ketone, 2,2'-dimethoxy-2-phenylacetophenone, xanthone, fluorene, fluorenone, benzaldehyde, anthraquinone, triphenylamine, carbazole, 3-methylacetophenone, 4-chlorobenzophenone, 4,4'-dimethoxybenzophenone, 4,4'-diaminobenzophenone, Michler's ketone, benzoylpropyl ether, benzoin ethyl ether, benzil dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholinopropan-1-one, 2,4,6-trimethylbenzoyldiphenylphosphine oxide, 2-benzyl-2-dimethylamino-1-(4-morpholinophenyl)butan-1-one, 1-[4-(2-hydroxyethoxy)phenyl]-2-hydroxy-2-methylpropan-1-on e, and the like. Such light-induced radical generator may be used singly or in combination of two or more.

Among such light-induced radical generators, 2-methyl-1-[4-(methylthio)phenyl]-2-morpholinopropan-1-one, 2,4,6-trimethylbenzoyldiphenylphospine oxide and 1-hydroxycyclohexyl phenyl ketone are preferred.

Commercial products of such light-induced radical generator may be used. For example, 2-methyl-1-[4-(methylthio)phenyl]-2-morpholinopropan-1-one is available as "Irgacure 907" (from Ciba Specialty Chemicals Co., Ltd.), whereas 1-hydroxycyclohexyl phenyl ketone is available as "Irgacure 184" (from Ciba Specialty Chemicals Co., Ltd.).

The amount of the light-induced radical generator is not particularly limited so far as it is sufficient to proceed the curing reaction. It is generally 0.1 to 20 parts by weight, and preferably 0.5 to 10 parts by weight, with respect to 100 parts by weight of the acrylate. When the amount of light-induced radical generator is less than the above range, curing reaction of the acrylate does not proceed enough so that the hardness of primer (c) layer might be insufficient. When the amount of light-induced radical generator exceeds the above range, the stability of primer (c) layer during storage might be reduced.

The above (meth)acrylate is preferably used after addition of a solvent in terms of film formation properties. In this case, the solvent is not particularly limited so far as it can dissolve or disperse the (meth)acrylate. A (meth) acrylate composition to which a solvent is added may be an organic solvent-based system or an aqueous system such as emulsion, colloidal dispersion and aqueous solution.

The organic solvent used here includes, for example, methanol, ethanol, isopropyl alcohol, n-butyl alcohol, acetone, toluene, methyl ethyl ketone, methyl isobutyl ketone, ethyl acetate, and the like. Particularly, it is preferred to use an alcohol such as methanol, ethanol and isopropyl alcohol or a ketone such as methyl ethyl ketone and methyl isobutyl ketone singly or as a mixture of two or more, because such solvents yield compositions with good adhesion to substrates and excellent film formation properties. The organic solvents may contain water.

(ii) Urethane primer layer

The above urethane primer layer can be formed by coating a surface of the norbornene resin film with a polyurethane composition. Such polyurethane composition contains a polyurethane resin and a solvent.

The polyurethane resin is not particularly limited so far as the resin has a plurality of urethane bonds. It includes, for example, a polyurethane resin obtained by reaction of a polyol with a polyisocyanate. The number-average molecular weight of the polyurethane resin used in the present invention is generally 1,000 to 200,000, and preferably 30,000 to 100,000.

In order to stably dissolve or disperse the polyurethane resin in an organic solvent and/or water and to improve coatability of an adhesive and the bondability between a substrate and the adhesive, it is also preferred to add a hydrophilic group-containing compound, together with the polyol and the polyisocyanate, as a polymerization component.

The above polyol includes polyether polyols, polyester polyols, polyacryl polyols, and the like. Among them, polyether polyols are particularly preferred. Such polyether polyols include, for example, a polyether polyol obtained by ring-opening copolymerization of an ion-polymerizable cyclic compound with a polyhydric alcohol.

The polyhydric alcohol includes ethylene glycol, polyethylene glycol, propylene glycol, polypropylene glycol, polytetramethylene glycol, polyhexamethylene glycol, polyheptamethylene glycol, polydecamethylene glycol, glycerol, trimethylolpropane, pentaerythritol, bisphenol A, bisphenol F, hydrogenated bisphenol A, hydrogenated bisphenol F, hydroquinone, naphthohydroquinone, anthrahydroquinone, 1,4-cyclohexanediol, tricyclodecanediol, tricyclodecanedimethanol, pentacyclopentadecanediol, pentacyclopentadecanedimethanol, and the like. These may be used singly or in combination of two or more.

The ion-polymerizable cyclic compound includes, for example, cyclic ethers such as ethylene oxide, propylene oxide, 1,2-butylene oxide, butene-1-oxide, isobutene oxide, 3,3-bischloromethyloxetane, tetrahydrofuran, 2-methyltetrahydrofuran, 3-metyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyloxetane, vinyltetrahydrofuran, vinylcyclohexene oxide, phenyl glycidyl ether, butyl glycidyl ether and glycidyl benzoate. These may be used singly or in combination of two or more.

There may be also used a polyether polyol obtained by ring-opening copolymerization of the ion-polymerizable cyclic compound with a cyclic imine such as ethyleneimine, a cyclic lactone such as β-propiolactone and glycolic acid lactide, or a dimethylcyclopolysiloxane. In the ring-opened copolymer of such ion-copolymerizable cyclic compound, the monomer units may be linked randomly or in a blocked manner. Preferred polyether polyols are polytetramethylene glycol and polyhexamethylene glycol.

As the polyisocyanate, there may be used a polyisocyanate generally used in manufacturing polyurethane without particular limitation. It includes, for example, 2,4-tolylenediisocyanate, 2,6-tolylenediisocyanate, 1,3-xylylenediisocyanate, 1,4-xylyenediisocyanate, 1,5-naphthalenediisocyanate, m-phenylenediisocyanate, p-phenylenediisocyanate, 3,3'-dimethyl-4,4'-diphenylmethanediisocyanate, 4,4'-diphenylmethanediisocyanate, 3,3'-dimethylphenylenediisocyanate, 4,4'-biphenylenediisocyanate, 1,6-hexanediisocyanate, isophoronediisocyanate, methylenebis(4-cyclohexylisocyanate), 2,2,4-trimethylhexamethylenediisocyanate, bis(2-isocyanatoethyl) fumarate, 6-isopropyl-1,3-phenyldiisocyanate, di(4-isocyanatophenyl)propane, lysinediisocyanate, hydrogenated diphenylmethanediisocyanate, hydrogenated xylylenediisocyanate, tetramethylxylylenediisocyanate, 2,5(or 6)-bis(isocyanatomethyl)bicyclo[2.2.1]heptane, and others. Such polyisocyanates may be used singly or in combination of two or more. Among them, isophoronediisocyanate is preferred.

The hydrophilic group-containing compound includes ionic compounds containing at least one or more active hydrogen atom and a carboxyl group and/or a sulfonic acid group within a molecule. Such hydrophilic group-containing compounds include, for example, sulfonic acids, such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid and 2,4-diaminotoluene-5-sulfonic acid, and their derivatives; and carboxyl group-containing compounds, such as 2,2-dimethylolpropionic acid, 2,2-dimethylolbutyric acid, 2,2-dimethylolvaleric acid, dioxymaleic acid, 2,6-dioxybenzoic acid and 3,4-diaminobenzoic acid, and their derivatives.

In the reaction of these compounds, it is generally preferred to use a urethane-formation catalyst such as copper naphthenate, cobalt naphthenate, zinc naphthenate, di-n-butyltin laurate, triethylamine, 1,4-diazabicyclo[2.2.2]octane and 2,6,7-trimethyl-1,4-diazabicyclo[2.2.2]octane in an amount of 0.01 to 1 part by weight with respect to 100 parts by weight of the total amount of reactants. The reaction temperature is generally 10 to 90°C, and preferably 30 to 80°C.

The solvent used for the polyurethane composition is not particularly limited so far as it can dissolve or disperse the polyurethane resin. The polyurethane composition may be in an organic solvent-based system or an aqueous system such as emulsion, colloidal dispersion and aqueous solution.

The organic solvent used here includes, for example, methanol, ethanol, isopropyl alcohol, n-butyl alcohol, acetone, toluene, methyl ethyl ketone, methyl isobutyl ketone, ethyl acetate, and others. The aqueous system may also contain, for example, such an alcohol or a ketone as described above. Furthermore, in the case of aqueous system, a

dispersant may be blended, or the polyurethane resin may have a functional group such as carboxyl, sulfonyl and ammonium group introduced therein.

Among the above solvents or combinations thereof, preferred are solvents selected from methanol, ethanol, isopropyl alcohol, n-butyl alcohol, methyl ethyl ketone, methyl isobutyl ketone and water, which are used singly or as a mixture of two or more, because such solvents cause little variation on the retardation of a substrate and provide good coatability to the composition.

The solid content of the polyurethane composition is generally 1 to 60% by weight, preferably 1 to 30% by weight, and more preferably 1 to 10% by weight. When the solid content is lower than the above range, it may be difficult to form a polyurethane layer with a desired thickness, whereas when exceeding the above range, it tends to be difficult to form a uniform polyurethane layer.

The polyurethane composition may be further blended with crosslinking agents, tackifiers, antioxidants, colorants, ultraviolet absorbers, light stabilizers, silane coupling agents, heat polymerization inhibitors, leveling agents, surfactants, preservation stabilizers, plasticizers, lubricants, fillers, antiaging agents, wettability improvers, coating surface improvers, and others. In particular, when carboxyl groups are introduced into the polyurethane composition as the hydrophilic group-containing compound, an epoxy crosslinking agent is preferably used.

Such epoxy crosslinking agent is not particularly limited so far as it contains at least one epoxy group within a molecule. It includes, for example, bisphenol-type epoxy compounds, novolac-type epoxy compounds, alicyclic epoxy compounds, aliphatic epoxy compounds, aromatic epoxy compounds, glycidylamine-type epoxy compounds, halogenated epoxy compounds, and others.

More specifically, it includes
bisphenol-type epoxy compounds such as bisphenol A diglycidyl ether, bisphenol F diglycidyl ether and bisphenol S diglycidyl ether;
novolac-type epoxy compounds such as phenol novolac-type epoxy compound and cresol novolac-type epoxy compound;
alicyclic epoxy compounds such as 3,4-epoxycyclohexylmethyl 3',4'-epoxycyclohexanecarboxylate, 2-(3,4-epoxycyclohexyl-5,5-spiro-3,4-epoxy)cyclohexane-m-di oxane, bis(3,4-epoxycyclohexylmethyl) adipate, vinylcyclohexene oxide, 4-vinylepoxycyclohexane, bis(3,4-epoxy-6-methylcyclohexylmethyl) adipate, 3,4-epoxy-6-methylcyclohexyl-3',4'-epoxy-6'-methylcyclohexa necarboxylate, methylenebis(3,4-epoxycyclohexane), dicyclopentadiene diepoxide, ethylene glycol di(3,4-epoxycyclohexylmethyl) ether, ethylene bis(3,4-epoxycyclohexanecarboxylate), epoxidized tetrabenzyl alcohol, lactone-modified 3,4-epoxycyclohexylmethyl-3',4'-epoxycyclohexanecarboxylate, lactone-modified epoxydized tetrahydrobenzyl alcohol, cyclohexene oxide, hydrogenated bisphenol A diglycidyl ether, hydrogenated bisphenol F diglycidyl ether and hydrogenated bisphenol AD diglycidyl ether;
aliphatic epoxy compounds such as 1,4-butanediol diglycidyl ether, 1,6-hexanediol diglycidyl ether, glycerol triglycidyl ether and trimethylolpropane triglycidyl ether;
halogenated epoxy compounds such as brominated bisphenol A diglycidyl ether, brominated bisphenol F diglycidyl ether and brominated bisphenol S diglycidyl ether; and
glycidylamine-type epoxy compounds such as tetraglycidylaminophenylmethane.

Besides the above compounds, there may be mentioned polyalkylene glycol diglycidyl ethers such as polyethylene glycol diglycidyl ether and polypropylene glycol diglycidyl ether; polyglycidyl ethers of polyetherpolyols obtained by addition of one or two or more of alkylene oxide to an aliphatic polyhydric alcohol such as ethylene glycol, propylene glycol and glycerol; diglycidyl esters of a long-chain aliphatic dibasic acid; monoglycidyl ethers of a higher aliphatic alcohol; monoglycidyl ethers of phenol, cresol, butylphenol, or a polyether alcohol obtained by adding an alkylene oxide thereto; glycidyl esters of a higher fatty acid; epoxidized soybean oil, butyl epoxystearate, octyl epoxystearate, epoxidized flaxseed oil, and others.

There may be also used an epoxy resin in which one or more such compounds is(are) already (co)polymerized to a suitable extent.

Furthermore, epoxy compounds usable in the present invention include an epoxidized compound of a (co) polymer such as a polymer of a conjugated diene monomer, a copolymer of a conjugated diene monomer with a compound having an ethylenic unsaturated bond-containing group, a copolymer of a diene monomer with a compound having an ethylenic unsaturated bond-containing group, and natural rubber.

Commercial products of the above polyurethane composition include, for example, "Hydran WLS-201", "WLS-202", "WLS-210", "WLS-213" and "WLS-220" (from Dainippon Ink and Chemicals Incorporated).

(iii) Ultrafine particle

Ultrafine particles are also preferably added in addition to the acrylic and/or urethane polymers in order to control crosslinking density and film formation properties of the acrylic and/or urethane polymers. Specifically, inorganic ultrafine particles, such as silica, zirconia, titania and tin oxide, or organic ultrafine particles made of an acrylic polymer

are preferably used.

(Method to form primer (c) layer)

The method to form acrylic and/or urethane primer (c) layer is not particularly limited to, but includes various methods such as spin coating, wire coating, bar coating, roll coating, blade coating, curtain coating and screen printing.
The temperature in drying the primer composition is exemplified by, but not particularly limited to, 60 to 150°C. It is better to make the amount of residual solvents in primer (c) layer as low as possible; it is generally 3% by weight or less, preferably 1% by weight or less, and more preferably 0.5% by weight or less.
The acrylic and/or urethane primer (c) layer preferably has a total light transmittance of generally 80% or higher, preferably 90% or higher.
When the primer (c) layer is formed between the film (a) layer and the film (b) layer as described above, in laminating the film (a) layer on the film (b) layer, the coatability of adhesive is improved, thereby giving stable adhesion over a long period.

(Method to manufacture optical film with primer (c) layer)

When the optical film of the present invention has a primer (c) layer , said optical film can be manufactured by a method in which the primer (c) layer is formed, by coating, on a surface of film (a) obtained by uniaxial or biaxial stretching, and then the film (b) layer is formed on said primer (c) layer by coating.
Alternatively, the optical film having a primer (c) layer can be also manufactured by a method in which the primer (c) layer is formed, by coating, on a surface of an unstretched resin film made of the cyclic olefin resin, the film (b) layer is formed on said primer (c) layer by coating, and the resultant laminated film is uniaxially or biaxially stretched.
When the primer (c) layer is formed between the film (a) layer and the film (b) layer as described above, the coatability of adhesive, if used, is improved, and the improved adhesion provides the stability in manufacturing and the stable performances in processing the film and in using the optical film.

(Unstretched resin film)

The unstretched resin film made of the cyclic olefin resin can be obtained by a publicly known film formation method such as melt molding methods and solution flow casting methods (solution-casting methods). Solution cast methods are preferred because the film thickness is uniform and the surface flatness is good. Melt molding methods are also preferred from the aspect of the productivity and cost.
The solution-casting method includes, for example, a method in which the cyclic olefin resin is dissolved or dispersed in a proper solvent to prepare a liquid in a proper concentration, this liquid is poured or applied onto an appropriate substrate and dried, and then the resultant resin film is peeled from the substrate.
The substrate used in the solution-casting method includes, for example, metal drums, steel belts, polyester films made of polyethylene terephthalate (PET), polyethylene naphthalate (PEN) or the like, polytetrafluoroethylene belts, and others. As described above, the film (b) layer made of the polyimide resin is formed by a solution-casting method using film (a) (including unstretched film) made of the cyclic olefin resin as a substrate.
When polyester films are used as the substrate, surface-treated films may be used. The method for surface treatment includes hydrophilic treatment generally used, for example, a method of stacking an acrylic resin or a sulfonic acid base-containing resin by coating or laminating, a method of increasing the hydrophilicity of film surface with plasma, corona discharge, or other treatments, and the like.
The concentration of resin component in the resin solution is generally 0.1 to 90% by weight, preferably 1 to 50% by weight, and more preferably 5 to 35% by weight. When the concentration of resin component is lower than the above range, the resin film obtained may not have sufficient thickness, and its surface flatness may be poor because of foaming caused by solvent evaporation and the like. On the other hand, when the concentration of resin component exceeds the above range, too high viscosity of the resin solution may disable formation of a film with uniform thickness and surface state.
The viscosity at room temperature of resin solution is generally 1 to 1, 000, 000 mPa·s, preferably 10 to 100, 000 mPa·s, more preferably 100 to 50,000 mPa·s, and particularly preferably 1,000 to 40,000 mPa·s.
In case of cyclic olefin resin, the solvent used to prepare a resin solution includes, for example, aromatic solvents such as benzene, toluene and xylene; cellosolves such as methyl cellosolve, ethyl cellosolve and 1-methoxy-2-propanol; ketones such as diacetone alcohol, acetone, cyclohexanone, methyl ethyl ketone, 4-methyl-2-pentanone, cyclohexanone, ethylcyclohexanone and 1,2-dimethylcyclohexanone; esters such as methyl lactate and ethyl lactate; halogen-containing solvents such as 2,2,3,3-tetrafluoro-1-propanol, methylene chloride and chloroform; ethers such as tetrahydrofuran and dioxane; alcohols such as 1-pentanol and 1-butanol; and others.

In case of polyimide resin or polyetherimide, the solvent includes, for example, aprotic polar solvents such as N-methyl-2-pyrrolidone, γ-butyrolactone, N,N-dimethylformamide, N,N-dimethylacetamide, dimethyl sulfoxide, terametylurea and hexamethylphosphoramide; phenolic solvents such as m-cresol, xylenol, phenol and halogenated phenols; and others.

The above solvents may be used singly or in combination of two or more.

The method to coat a substrate with a resin solution includes use of a die, coater or brush, spraying, roll-coating, spin-coating, dip-coating, gravure-coating, and others. Coating of the resin solution may be repeated in order to obtain an optical film with a desired thickness.

There is no particular limitation on the method to evaporate solvent from the resin solution applied to a substrate. There may be used common methods, for example, a method of passing the coated substrate through a dry kiln with many rollers. If air bubbles are generated on evaporation of the solvent, properties of the optical film obtained might be drastically deteriorated. Therefore, in order to prevent formation of air bubbles, preferably, solvent is evaporated in a plurality of steps and the temperature and airflow volume are controlled in each step.

The residual solvent content in resin film is generally 20% by weight or less, preferably 5% by weight or less, more preferably 1% by weight or less, and particularly preferably 0.5% by weight or less. When the residual solvent content exceeds the above range, the resin film may show larger dimensional change with time in practical use thereof, and the residual solvent might lower the glass transition temperature, lowering the heat resistance.

Further, the residual solvent content in resin film might be required to properly adjust within the above range in order to optimize a stretching step described below. Specifically, the residual solvent content may be adjusted to generally 20 to 0.1% by weight, preferably 5 to 0.1% by weight, and more preferably 1 to 0.1% by weight so that a constant and uniform retardation can be generated in the stretching step. When the solvent content is controlled within such range, the stretching is facilitated, and the retardation can be easily controlled.

After the amount of residual solvent in the resin film is controlled within the above range and then the stretching step is gone through, the amount of residual solvent may be further reduced in a drying step in order to stabilize optical properties such as the retardation. In such case, the residual solvent is reduced to an amount of preferably 5 to 0.1% by weight, and more preferably 1 to 0.1% by weight.

The thickness of resin film thus obtained is generally 0.1 to 3,000 μm, preferably 0.1 to 1,000 μm, more preferably 1 to 500 μm, and particularly preferably 5 to 300 μm. When the thickness is less than the above range, the resin film is practically very difficult to handle. On the other hand, when the thickness exceeds the above range, winding the resin film in a form of roll becomes difficult.

The thickness of resin film thus obtained is, for resin film (a'), generally 5 to 1,000 μm, preferably 15 to 500 μm, more preferably 25 to 300 μm, and particularly preferably 40 to 150 μm; whereas, for resin film (b'), generally 0.1 to 250 μm, preferably 0.5 to 200 μm, more preferably 1 to 100 μm, and particularly preferably 1 to 50 μm. When the thickness is less than the above range, the resin film is practically difficult to handle. On the other hand, when the thickness exceeds the above range, winding the resin film in a form of roll becomes difficult.

(Stretching)

For stretching the unstretched resin film thus obtained so as to attain the above optical properties, there may be used a publicly known method of free-end uniaxial stretching, strip-biaxial stretching or biaxial stretching.

In case of uniaxial stretching, the stretching speed is generally 1 to 5,000%/min, preferably 50 to 1,000%/min, and more preferably 100 to 1,000%/min.

In case of biaxial stretching, there may be used a method of simultaneously stretching in two directions or a method of uniaxially stretching followed by stretching in a direction different from said stretching direction. The intersection angle between two stretching axes herein is determined according to properties required for an intended optical film without particular limitation. The angle is generally in a range of 120 to 60 degrees. The stretching speeds in each direction, which may be the same as or different from the other, is generally 1 to 5,000%/min, preferably 50 to 1,000%/min, more preferably 100 to 1,000%/min, and particularly preferably 100 to 500%/min.

The stretching temperature is, although not limited to, in a range of Tg±30°C, preferably Tg ±15°C, and more preferably Tg-5°C to Tg+15°C based on the glass transition temperature of resin, Tg. Setting the stretching temperature within the above range is preferred because generation of unevenness in retardation can be suppressed in the resultant stretched film, and the refractive index of each component can be readily controlled.

The stretch ratio is determined according to the properties required for an intended optical film without particular limitation. It is generally 1.01 to 10 times, preferably 1.03 to 5 times, and more preferably 1.03 to 3 times. When the stretch ratio exceeds the above range, the retardation in resultant stretched film might be hard to control. The stretched film may be cooled as it is, but preferably cooled after keeping at a temperature between Tg-20°C and Tg of the resin film for at least 10 seconds or longer, preferably 30 seconds to 60 minutes, and more preferably 1 to 60 minutes. This treatment can give a stable retardation film wherein the retardation of transmitted light is little varied with time.

In the film stretched as described above, molecules are oriented through stretching, resulting in the function of giving retardation to transmitted light. The retardation can be controlled by the stretch ratio, stretching temperature, film thickness, and others.

<Usage>

The optical film of the present invention has the above optical properties and excellent viewing angle compensation effects, and hence it is suitable as a viewing angle compensation film used in liquid crystal displays, particularly VA-type large liquid crystal TV. Besides such applications, it can be used, for example, as various liquid crystal display elements in cellular phones, digital information terminals, beepers, navigation systems, in-vehicle liquid crystal displays, liquid crystal monitors, light control panels, displays for OA equipments or displays for AV equipments; as electroluminescence display elements; in touch-sensitive panels or the like. It can be also useful as a wavelength plate used in recording or playback equipments for optical discs such as CD, CD-R, MD, MO and DVD.

[Polarizer]

The polarizer of the present invention is a product in which the optical film of the present invention is laminated on one or both sides of a polarizer (polarization film). For lamination, the optical film may be directly glued to the polarizer using a proper adhesive or tackifier, or the optical film may be glued to the polarizer with a protective film laminated thereon. Considering the cost and others, it is preferred to laminate the optical film of the present invention directly to the polarizer.

As the polarizer (polarization film), there may be used, although not limited to, for example, a stretched film obtained by a method in which a polarizing component, such as iodine and dichroic dyes, is incorporated in a film made of a polyvinyl alcohol-based resin, such as polyvinyl alcohol (PVA), polyvinyl formal and polyvinyl acetal, followed by stretching.

As the protective film, there may be used, although not limited to, transparent, mechanically strong, thermally stable polymer films such as cellulose films (for example, triacetyl cellulose (TAC)), polyester films, polycarbonate films, polyethersulfone films, polyamide films, polyimide films and polyolefin films.

There are no particular limitations on the adhesive or pressure-sensitive adhesive used in lamination of the protective film on the polarizer. There may be used, for example, adhesives or pressure-sensitive adhesives made of acrylic polymers or vinyl alcohol polymers. In particular, when a PVA film is used as the polarizer, PVA adhesives are preferably used from a viewpoint of adhesion.

There are no particular limitations on the adhesive or pressure-sensitive adhesive used in direct lamination of the optical film to the polarizer. There may be used, for example, aqueous pressure-sensitive adhesives comprising an aqueous dispersion of an acrylate polymer and others. Use of such aqueous pressure-sensitive adhesives is preferred because it further improves the adhesion, resulting in stable durability. When the optical film is laminated on the polarizer with a protective film laminated thereon, adhesives or tackifiers as described above may be used as appropriate without particular limitation.

The polarizer of the present invention has excellent viewing angle compensation effects. Therefore, when said polarizer is provided on one or both sides of a liquid crystal cell in a liquid crystal display, light leakage or color dropout (coloration) at black display can be prevented, and also a high contrast ratio is achieved. The polarizer of the present invention is also used in wide range of applications, because the changes in properties are small even after prolonged use at high temperatures.

## Examples

Hereinafter, the present invention is further specifically described with Examples, but the present invention is not limited to the examples below so far as it does not surpass its gist. In the following, "parts" and "%" represent "parts by weight" and "% by weight", respectively, unless otherwise noted.

Measurement methods for the properties in the present invention are given below.

(1) Glass transition temperature (Tg)

The glass transition temperature was measured with a differential scanning calorimeter (DSC) manufactured by Seiko Instruments Inc. at a heating rate of 20°C/min under nitrogen atmosphere.

(2) Saturated water absorption ratio

The saturated water absorption ratio was determined by measuring a weight change of a specimen before and after immersion in water at 23°C for one week according to ASTM D570.

(3) Total light transmittance and haze

The total light transmittance and haze were measured with a haze meter (model HGM-2DP) manufactured by Suga Test Instruments Co., Ltd.

(4) Retardation of transmitted light

The retardations of transmitted light were measured at wavelengths of 480, 550, 590, 630 and 750 nm with "KOBRA-21ADH" manufactured by Oji Scientific Instruments, and the values in region other than these wavelengths were calculated with Cauchy's dispersion equation using the retardation values at these wavelengths.

(5) Measurement of luminescent spot

A specimen was sandwiched between polarizers under cross-Nicol state and placed on a light source of 1000 $cd/m^2$ to observe partial light leakage with the naked eye and determine a number of observable luminescent spots of 10 μm or larger.

(6) Measurement of brightness, viewing angle and contrast ratio

The brightness, viewing angle, and contrast ratio of liquid crystal panel were measured with a luminance meter "LS-110" manufactured by Minolta Co., Ltd. in a dark room.

(7) Residual solvent content

A specimen was dissolved in a good solvent other than the solvents used, and the resultant solution was analyzed by gas chromatography ("GC-7A" manufactured by Shimadzu Corporation).

(8) Logarithmic viscosity

The logarithmic viscosity was measured with an Ubbelohde type viscometer using a solution in chloroform, cyclohexane or N-methyl-2-pyrrolidone (sample concentration: 0.5 g/dL) at 30°C.

<Synthesis example 1>

A nitrogen-purged reaction vessel was charged with 250 parts of 8-methyl-8-methoxycarbonyltetracyclo $[4.4.0.1^{2,5}.1^{7,10}]$-3-dode cene (specific monomer), 18 parts of 1-hexene (molecular weight regulator) and 750 parts of toluene (solvent for ring-opening polymerization) , and the resultant solution was heated to 60°C. To this solution, there were added, as polymerization catalysts, 0.62 parts of toluene solution containing triethylaluminum (1.5 mol/L) and 3.7 parts of toluene solution containing tungsten hexachloride modified with t-butanol and methanol (t-butanol:methanol: tungsten = 0.35 mol:0.3 mol:1 mol) (concentration 0.05 mol/L). This reaction system was heated at 80°C for 3 hours with stirring to obtain a solution of the ring-opened polymer through ring-opening polymerization. The polymerization conversion in this polymerization was 97% and the logarithmic viscosity of the ring-opened polymer obtained was 0.75 dL/g as measured in chloroform at 30°C.

One thousand parts of the solution of ring-opened polymer thus obtained were charged into an autoclave, here were added 0. 12 parts of $RuHCl(CO)[P(C_6H_5)_3]_3$, and hydrogenation was performed under a hydrogen pressure of 100 $kg/cm^2$ at a reaction temperature of 165°C for 3 hours with stirring.

The reaction solution obtained (solution of the hydrogenated polymer) was cooled and then hydrogen gas pressure was released. This reaction solution was poured into a large volume of methanol to form a coagulated product, which was separated to collect and then dried, thereby yielding a hydrogenated polymer (referred to as "resin A1" hereinafter).

For resin A1 thus obtained, the hydrogenation ratio was 99.9% as determined by $^1$H-NMR, the glass transition temperature (Tg) was 165°C as measured with DSC,
the number-average molecular weight (Mn) was 32,000, the weight-average molecular weight (Mw) was 137,000 and

the molecular weight distribution (Mw/Mn) was 4.29 in terms of polystyrene as measured with GPC (solvent: tetrahydrofuran), the saturated water absorption ratio was 0.3% at 23°C,
the SP value was 19 $MPa^{1/2}$, and
the logarithmic viscosity was 0.78 dL/g in chloroform at 30°C.

<Synthesis example 2>

A hydrogenated polymer (referred to as "resin A2" hereinafter) was obtained similarly to Synthesis example 1 except using 215 parts of 8-methyl-8-methoxycarbonyltetracyclo[4.4.0.$1^{2,5}$.$1^{7,10}$]-3-dode cene and 35 parts of bicyclo [2.2.1]hept-2-ene and changing the amount of 1-hexene (molecular weight regulator) to 18 parts.

For resin A2 obtained,
the hydrogenation ratio was 99.9%,
the glass transition temperature (Tg) was 125°C as measured with DSC,
Mn was 46, 000, Mw was 190,000 and molecular weight distribution (Mw/Mn) was 4.15 in terms of polystyrene as measured with GPC (solvent: tetrahydrofuran),
the saturated water absorption ratio was 0.18% at 23°C, the SP value was 19 $MPa^{1/2}$,
the logarithmic viscosity was 0.69 dL/g in chloroform at 30°C, and the gel content was 0.2%.

<Synthesis example 3>

A hydrogenated polymer (referred to as "resin A3" hereinafter) was obtained similarly to Synthesis example 1 except using 53 parts of tetracyclo [4.4.0.$1^{2,5}$.$1^{7,10}$]-3-dodecene, 46 parts of 8-ethylidene tetracyclo[4.4.0.$1^{2,5}$.$1^{7,10}$]-3-dodecene and 66 parts of tricyclo[4.3.0.$1^{2,5}$]deca-3,7-diene, changing the amount of 1-hexene (molecular weight regulator) to 18 parts, and using cyclohexane instead of toluene as a solvent for ring-opening polymerization.

For resin A3 obtained, the hydrogenation ratio was 99.9%,
the glass transition temperature (Tg) was 137°C, measured with DSC,
Mn was 39, 000, Mw was 158, 000 and molecular weight distribution (Mw/Mn) was 4.05 in terms of polystyrene as measured with GPC (solvent: cyclohexane),
the saturated water absorption ratio was 0.01% at 23°C, the SP value was 17 $MPa^{1/2}$,
the logarithmic viscosity was 0.70 dL/g in chloroform at 30°C, and the gel content was 0.2%.

<Synthesis example 4>

In 200 g of N-methyl-2-pyrroridone, 18.9141 g of 2,3,5-tricarboxycyclopentylacetic acid dianhydride and 31.0859 g of 4,4'-bis(4-aminophenoxy)biphenyl were dissolved, and the reaction was performed at ambient temperature for 3 hours. The resultant reaction solution was poured into a large excess of methanol to precipitate a polyamic acid, which was then washed with methanol and dried under reduced pressure at 40°C for 15 hours to yield 48.2 g of a polymer, which had a logarithmic viscosity of 2.45 dL/g as measured in N-methyl-2-pyrrolidone. In 270 g of γ-butyrolactone, 30.0 g of this polymer was dissolved, 20.0 g of pyridine and 15.0 g of acetic anhydride were added here, and imidation was performed at 120°C for 3 hours. The reaction solution obtained was poured into a large excess of methanol to precipitate a polymer, yielding a polyimide (referred to as "resin B1" hereinafter), which had a logarithmic viscosity of 2.39 dL/g.

<Synthesis example 5>

A polyimide (referred to as "resin B2" hereinafter) was synthesized similarly to Synthesis example 4 except using 2,2'-dimethyl-4,4'-diaminobiphenyl instead of 4,4'-bis(4-aminophenoxy)biphenyl. Resin B2 obtained had a logarithmic viscosity of 2.10 dL/g as measured in N-methyl-2-pyrrolidone.

<Synthesis example 6>

A polyimide (referred to as "resin B3" hereinafter) was synthesized similarly to Synthesis example 4 except using 4,4'-diaminodiphenylmethane instead of 4,4'-bis(4-aminophenoxy)biphenyl. Resin B3 obtained had a logarithmic viscosity of 0.86 dL/g as measured in N-methyl-2-pyrrolidone.

<Synthesis example 7>

In 200 g of N-methyl-2-pyrrolidone, 43.9302 g of ether bond-containing tetracarboxylic dianhydride represented by formula (VII) below and 9.1270 g of 1,3-phenylenediamine were dissolved, and the reaction was performed at ambient

temperature for 3 hours. The reaction solution obtained was poured into a large excess of methanol to precipitate a polyamic acid, which was washed with methanol and dried under reduced pressure at 40°C for 15 hours to yield 48.2 g of a polymer, which had a logarithmic viscosity of 2.38 dL/g measured in N-methyl-2-pyrrolidone. In 270 g of N-methyl-2-pyrrolidone, 30.0 g of this polymer was re-dissolved, 20.0 g of pyridine and 15.0 g of acetic anhydride were added here, and imidation was performed at 120°C for 3.5 hours. The reaction solution obtained was poured into a large excess of methanol to precipitate a polymer, yielding a polyetherimide (referred to as "resin B4" hereinafter) with a logarithmic viscosity of 2.35 dL/g.

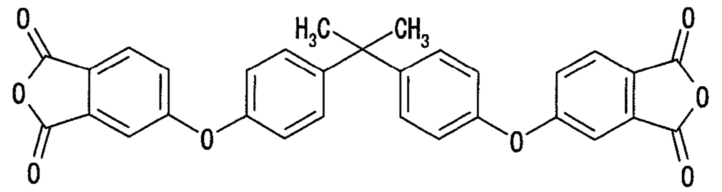

...(VII)

<Manufacture example 1> Resin film (a1)

Resin A1 was dissolved in toluene in a concentration of 30% (solution viscosity at ambient temperature being 30,000 mPa·s), and here was added pentaerythritol tetrakis[3-(3,5-di-tert-butyl-4-hydroxyphenyl)propionate] in an amount of 0.1 parts with respect to 100 parts of the polymer. The resultant solution was filtered through a metal fiber sintered filter with pore diameter of 5 μm from Nihon Pall, Ltd. at a flow rate controlled so that the differential pressure were kept 0.4 MPa or less. The solution obtained was applied to a PET film with thickness of 100 μm ("Lumilar-U94" from Toray Co., Ltd.) with hydrophilic surface treatment (treatment for facilitating bonding) with an acrylic acid-type agent, using a "INVEX Lab Coater" manufactured by Inoue Metalworking Industry Co., Ltd. installed in a Class 1000 clean room so as to form a film with thickness of 100 μm after drying. After primary drying at 50°C, the coated film was secondarily dried at 90°C. The PET film was peeled to yield a resin film, which was referred to as (a1). In the film obtained, the amount of residual solvent was 0.5%, and the total light transmittance was 93%.

<Manufacture example 2> Resin film (a2)

Resin film (a2) with thickness of 100 μm was obtained similarly to Manufacture example 1 except using resin A2 instead of resin A1. In the film obtained, the amount of residual solvent was 0.5%, and the total light transmittance was 93%.

<Manufacture example 3> Resin film (a3)

Resin film (a3) with thickness of 150 μm was obtained similarly to Manufacture example 1 except using resin A3 instead of resin A1 and using cyclohexane instead of toluene. In the film obtained, the amount of residual solvent was 0.5%, and the total light transmittance was 92%.

<Manufacture example 4> Resin film (a4)

Resin film (a1) was simultaneously biaxially stretched at 180°C at a stretch ratio of 1.44 in one direction and 1.72 in a direction orthogonal to the above direction to yield resin film (a4), which had a film thickness of 36 μm, R550 of 45 nm, and Rth of 135 nm.

<Manufacture example 5> Resin film (a5)

Resin film (a2) was simultaneously biaxially stretched at 122°C at a stretch ratio of 1.49 in one direction and 1.75 in a direction orthogonal to the above direction to yield resin film (a5), which had a film thickness of 34 μm, R550 of 67 nm, and Rth of 238 nm.

<Manufacture example 6> Resin film (a6)

Resin film (a3) was simultaneously biaxially stretched at 145°C at a stretch ratio of 1.69 in one direction and

1.95 in a direction orthogonal to the above direction to yield resin film (a6), which had a film thickness of 39 μm, R550 of 48 nm, and Rth of 142 nm.

<Manufacture example 7> Resin film (a7)

A composition (solid content: 10% by weight) was prepared by diluting "DESOLITE Z7524" (from JSR Corporation), which was an ultraviolet-curable resin, with a mixed solvent of methyl ethyl ketone and isopropyl alcohol, and this composition was applied to resin film (a4) using a wire bar with a gap of 24 μm. The coated film was heated at 80°C for 5 minutes to evaporate the solvent. The coated surface was then irradiated with ultraviolet light with 250 $mW/cm^2$ and 1 $J/cm^2$ using a metal halide lamp to yield resin film (a7) with a primer layer.

<Manufacture example 8> Resin film (a8)

A composition (solid content: 3% by weight) was prepared by diluting "Hydran WLS-201" (from Dainippon Ink and Chemicals Incorporated), which was a polyether polyurethane material, with methyl ethyl ketone. Resin film (a5) was coated with this composition using a wire bar with a gap of 12 μm. The coated film was dried at 80°C for 5 minutes to yield resin film (a8) with a primer layer.

<Manufacture example 9> Resin film (a9)

Resin film (a9) with a primer layer was obtained similarly to Manufacture example 8 except using resin film (a6) instead of resin film (a5).

<Manufacture example 10> Resin film (a10)

Resin film (a10) with a primer layer was obtained similarly to Manufacture example 7 except using resin film (a1) instead of resin film (a4).

[Example 1]

Laminated-type optical film (1), in which resin film (a4) and polyimide film (b1) made of resin B1 were integrated, was obtained similarly to Manufacture example 1 except using a γ-butyrolactone solution containing 10% of resin B1, using resin film (a4) obtained in Manufacture example 4 instead of a PET film as substrate, and not releasing the film from the substrate. In optical film (1) obtained, the thickness of polyimide film (b1) layer was 3 μm, and the total light transmittance was 92%.

[Example 2]

Laminated-type optical film (2), in which resin film (a4) and polyimide film (b2) made of resin B2 were integrated, was obtained similarly to Example 1 except using resin B2 instead of resin B1. In optical film (2) obtained, the thickness of polyimide film (b2) layer was 3 μm, and the total light transmittance was 92%.

[Example 3]

Laminated-type optical film (3), in which resin film (a4) and polyimide film (b3) made of resin B3 were integrated, was obtained similarly to Example 1 except using resin B3 instead of resin B1. In optical film (3) obtained, the thickness of polyimide film (b3) layer was 3 μm, and the total light transmittance was 92%.

[Example 4]

Laminated-type optical film (4), in which resin film (a5) and polyimide film (b4) made of resin B1 were integrated, was obtained similarly to Example 1 except using resin film (a5) instead of resin film (a4) as a substrate. In optical film (4) obtained, the thickness of polyimide layer was 3 μm, and the total light transmittance was 92%.

[Example 5]

A laminated-type resin film, in which resin film (a1) and polyimide film (b5) made of resin B1 were integrated, was obtained similarly to Example 1 except using resin film (a1) instead of resin film (a4) as a substrate. In the laminated

film obtained, the thickness of polyimide layer was 3 μm, and the total light transmittance was 92%. The laminated film was then simultaneously biaxially stretched at 180°C at a stretch ratio of 1.40 in one direction and 1.70 in the direction orthogonal to the above direction, yielding laminated-type optical film (5) composed of resin film (a1') formed by stretching resin film (a1) and polyimide film (b5') formed by stretching polyimide film (b5).

The optical properties and film thickness of optical films obtained in Examples 1 to 5 are shown in Table 1.

Table 1

| | | Cyclic olefin resin film layer | Polyimide resin film layer | Optical film |
|---|---|---|---|---|
| Ex. 1 | Film name | (a4) | (b1) | (1) |
| | Film thickness (μm) | 36 | 3 | 39 |
| | Rth (nm) | 135 | 137 | 272 |
| | R550 (nm) | 45 | 5 | 50 |
| | R450/R550 | 1.02 | 1.07 | - |
| | R650/R550 | 0.99 | 0.97 | - |
| Ex. 2 | Film name | (a4) | (b2) | (2) |
| | Film thickness (μm) | 36 | 3 | 39 |
| | Rth (nm) | 135 | 100 | 235 |
| | R550 (nm) | 45 | 3 | 48 |
| | R450/R550 | 1.02 | 1.06 | - |
| | R650/R550 | 0.99 | 0.97 | - |
| Ex. 3 | Film name | (a4) | (b3) | (3) |
| | Film thickness (μm) | 36 | 3 | 39 |
| | Rth (nm) | 135 | 55 | 190 |
| | R550 (nm) | 45 | 5 | 50 |
| | R450/R550 | 1.02 | 1.06 | - |
| | R650/R550 | 0.99 | 0.97 | - |
| Ex. 4 | Film name | (a5) | (b4) | (4) |
| | Film thickness (μm) | 34 | 3 | 37 |
| | Rth (nm) | 238 | 137 | 375 |
| | R550 (nm) | 67 | 5 | 67 |
| | R450/R550 | 1.01 | 1.07 | - |
| | R650/R550 | 1.00 | 0.97 | - |
| Ex. 5 | Film name | (a1') | (b5') | (5) |
| | Film thickness (μm) | 35 | 2 | 37 |
| | Rth (nm) | 130 | 362 | 492 |
| | R550 (nm) | 40 | 60 | 100 |
| | R450/R550 | 1.02 | 1.07 | - |
| | R650/R550 | 0.99 | 0.97 | - |

The above results clearly indicate that, in the laminated-type optical film composed of the cyclic olefin resin film and the polyimide layer of the present invention, the optical properties can be controlled in a wide range by selecting the structure of each layer and processing methods.

<Example to prepare aqueous pressure-sensitive adhesive>

A reaction vessel was charged with 250 parts of distilled water, to which 90 parts of butyl acrylate, 8 parts of 2-hydyroxyethyl methacrylate, 2 parts of divinylbenzene and 0.1 parts of potassium oleate were added. The content of the vessel was stirred with a Teflon (trademark) agitator blade to disperse. After purged with nitrogen, the reaction system was heated to 50°C, and here were added 0.2 parts of potassium persulfate to initiate polymerization. After 2 hours, 0.1 parts of potassium persulfate was further added, and the mixture was heated to 80°C to continue polymerization for 1 hour to yield a polymer dispersion. This polymer dispersion was concentrated with an evaporator to a solid content of 70% to yield an aqueous pressure-sensitive adhesive (polar group-containing pressure-sensitive adhesive), which was a water-dispersed acrylate polymer.

For the acrylate polymer constituting aqueous pressure-sensitive adhesive thus obtained, the number-average molecular weight (Mn) was 69,000 and the weight-average molecular weight (Mw) was 135,000 in terms of polystyrene as measured with GPC (solvent: tetrahydrofuran), and the logarithmic viscosity was 1.2 dL/g as measured in chloroform at 30°C.

[Example 6]

A commercially available polyvinyl alcohol (PVA) was pre-stretched at a stretch ratio of 3 in a dying bath, which was an aqueous solution containing 0.03% by weight of iodine and 0.5% by weight of potassium iodide at 30°C, and then post-stretched at a stretch ratio of 2 in a crosslinking bath, which was an aqueous solution containing 5% by weight of boric acid and 8% by weight of potassium iodide at 55°C. The resultant film was dried to yield a polarizer.

A composition (solid content: 3% by weight) was prepared by diluting "Hydran WLS-201" (from Dainippon Ink and Chemicals Incorporated), which was a polyether polyurethane material, with methyl ethyl ketone. This composition was applied to resin film (a4) using a wire bar No.2 (from K & K Co., Ltd.) and dried at 80°C for 50 minutes to yield film (ac1) having a urethane primer (c) layer. In film (ac1) obtained, the amount of residual solvent was 0.5%, and the total light transmittance was 93%. Subsequently, the urethane primer (c) layer in film (ac1) was coated with γ-butyrolactone solution containing 10% of resin B1 to form polyimide film (b6), thereby yielding laminated-type optical film (6). In optical film (6) obtained, the thickness of polyimide film (b6) layer was 3 μm, and the total light transmittance was 92%. Optical properties and film thickness of optical film (6) are shown in Table 2.

Table 2

| | Cyclic olefin resin film layer | Polyimide resin film layer | Optical film |
|---|---|---|---|
| Film name | (a4) | (b6) | (6) |
| Film thickness (μm) | 36 | 3 | 40 |
| Rth (nm) | 135 | 137 | 274 |
| R550 (nm) | 45 | 5 | 51 |
| R450/R550 | 1.02 | 1.07 | - |
| R650/R550 | 0.99 | 0.97 | - |

Then, optical film (6) was glued, with the above aqueous pressure-sensitive adhesive, to one side of the above polarizer so that the transmission axis of the polarizer was aligned parallel with the axis of stretching of optical film (6), while a commercially available triacetyl cellulose (TAC) film was glued to the other side of the polarizer with a PVA adhesive, yielding polarizer (1). For polarizer (1) obtained, the transmittance was 44.0%, and the degree of polarization was 99.9%.

In order to evaluate the properties of polarizer (1), a sample was prepared as follows. At first, from a liquid crystal panel of liquid crystal TV (LC-13B1-S) from Sharp Corporation, in which ASV-mode low-reflection black TFT liquid crystal was employed, a polarizer and a retardation film attached to the front viewed from viewer' s side were peeled off. Polarizer (1) was then attached to this peeled portion so that it was aligned in the same direction as the transmission axis of the polarizer originally attached and the retardation film (optical film (6)) of polarizer (1) was positioned on the liquid crystal cell side. A retardation film attached to the surface of the liquid crystal panel in the rear from viewer's side was peeled off to make a sample lacking a retardation film on the rear of the panel.

The contrast ratio of this liquid crystal TV with polarizer (1) was as high as 70 at an azimuthal angle of 45 degrees and a polar angle of 60 degrees. Measuremnet of the viewing angle in all directions (region with a contrast ratio of 10 or higher) confirmed that the viewing angle was 170 degrees or higher in all of vertical, horizontal and oblique

directions.

In a durability test, polarizer (1) was kept in an environment at 100°C or an environment at 60°C and 90RH% for 2, 000 hours, and the properties were similarly determined. The percentage change between before and after the durability test [=(before change - after change) x 100/before change] was 5% or less in any case.

[Comparative example 1]

Polarizer (2) was obtained similarly to Example 6 except using a commercially available TAC film instead of optical film (6). The transmittance and degree of polarization for polarizer (2) obtained were 44.0% and 99.9%, respectively.

Polarizer (2) obtained was attached to a liquid crystal TV similarly to Example 6. The contrast ratio was as low as 3 when determined at an azimuthal angle of 45 degrees and a polar angle of 60 degrees. When the viewing angle (region with a contrast ratio of 10 or higher) was determined in all directions, it was 170 degrees or higher in vertical and horizontal directions but only 80 degrees in the oblique direction.

In a durability test, polarizer (2) was kept in an environment at 100°C or an environment at 60°C and 90RH% for 2, 000 hours, and the degree of polarization was determined. The percentage change was 10% or 8%, respectively.

[Comparative example 2]

Specimens of polarizer (3) were similarly obtained to Example 6 except using a TAC film biaxially stretched to have retardations (Rth and R550) identical to those of film (a4) instead of cyclic olefin resin film (a4). The transmittance and degree of polarization for polarizer (3) obtained were 44.0% and 99.9%, respectively.

Polarizer (3) obtained was attached to a liquid crystal TV similarly to Example 6. The contrast ratio was 40 when determined at an azimuthal angle of 45 degrees and a polar angle of 60 degrees. When the viewing angle (region with a contrast ratio of 10 or higher) was determined in all directions, it was 170 degrees or higher in all of vertical, horizontal and oblique directions. However, in the durability test, after polarizer (3) was kept in an environment at 100°C or an environment at 60°C and 90RH% for 2,000 hours, the percentage change in the degree of polarization was 10% or 12%, respectively, and the change in contrast ratio was as large as 30% at an azimuthal angle of 45 degrees and a polar angle of 60 degrees.

[Example 7]

Laminated-type optical film (7), in which resin film (a7) and polyetherimide film (b7) made of resin B4 were integrated, was obtained similarly to Manufacture example 1 except using 5% N-metyl-2-pyrrolidone solution of resin B4, using resin film (a7) obtained in Manufacture example 7 instead of a PET film as a substrate, and not peeling the film from the substrate. Here, polyetherimide film (b7) was formed on a primer-applied side of resin film (a7). In optical film (7) obtained, the thickness of polyetherimide film (b7) layer was 10 μm, the total light transmittance was 91%, and the light transmittance was 0.5% at wavelength of 360 nm.

[Example 8]

Laminated-type optical film (8), in which resin film (a8) and polyetherimide film (b8) made of resin B4 were integrated, was obtained similarly to Example 1 except using resin film (a8) instead of resin film (a7). In optical film (8) obtained, the thickness of polyetherimide film (b8) layer was 5 μm, the total light transmittance was 91%, and the light transmittance was 8.2% at wavelength of 360 nm.

[Example 9]

Laminated-type optical film (9), in which resin film (a9) and polyetherimide film (b9) made of resin B4 were integrated, was obtained similarly to Example 1 except using resin film (a9) instead of a resin film (a7) and 5% methylene chloride solution instead of 5% N-methyl-2-pyrrolidone solution. In optical film (9) obtained, the thickness of polyetherimide film (b9) layer was 3 μm, the total light transmittance was 91%, and the light transmittance was 9.6% at wavelength of 360 nm.

[Example 10]

A laminated-type resin film, in which resin film (a10) and polyetherimide film (b10) made of resin B4 were integrated, was obtained similarly to Example 1 except using resin film (a10) instead of resin film (a7) as a substrate. In

the laminated film obtained, the thickness of polyetherimide film layer was 10 μm, the total light transmittance was 91%, and the light transmittance was 0.6% at wavelength of 360 nm.

The laminated film obtained was then simultaneously biaxially stretched at 180°C at a stretch ratio of 1.40 in one direction and 1.70 in a direction orthogonal to the above direction, to yield laminated-type optical film (10) comprising resin film (a10') formed by stretching resin film (a10) and polyimide film (b10') formed by stretching polyetherimide film (b10) .

The optical properties and film thickness of optical films obtained in Examples 7 to 10 are given in Table 3.

Table 3

| | | Cyclic olefin resin film layer | Polyetherimide resin film layer | Optical film |
|---|---|---|---|---|
| Ex. 7 | Film name | (a7) | (b7) | (7) |
| | Film thickness (μm) | 36 | 10 | 46 |
| | Rth (nm) | 135 | 287 | 422 |
| | R550 (nm) | 45 | 4 | 49 |
| | R450/R550 | 1.02 | 1.08 | - |
| | R650/R550 | 0.99 | 0.96 | - |
| Ex. 8 | Film name | (a8) | (b8) | (8) |
| | Film thickness (μm) | 34 | 5 | 39 |
| | Rth (nm) | 238 | 176 | 414 |
| | R550 (nm) | 67 | 3 | 70 |
| | R450/R550 | 1.01 | 1.08 | - |
| | R650/R550 | 1.00 | 0.96 | - |
| Ex. 9 | Film name | (a9) | (b9) | (9) |
| | Film thickness (μm) | 39 | 3 | 42 |
| | Rth (nm) | 142 | 135 | 277 |
| | R550 (nm) | 48 | 5 | 53 |
| | R450/R550 | 1.01 | 1.08 | - |
| | R650/R550 | 1.00 | 0.96 | - |
| Ex. 10 | Film name | (a10') | (b10') | (10) |
| | Film thickness (μm) | 35 | 2 | 37 |
| | Rth (nm) | 130 | 365 | 495 |
| | R550 (nm) | 40 | 63 | 103 |
| | R450/R550 | 1.02 | 1.08 | - |
| | R650/R550 | 0.99 | 0.96 | - |

The results clearly indicate that, in the laminated-type optical film of the invention composed of the cyclic olefin resin film and the polyetherimide layer, the optical properties can be controlled in a wide range by selecting the structure of each layer and processing methods.

[Example 11]

A commercially available PVA film was pre-stretched at a stretch ratio of 3 in a dying bath, which was an aqueous solution containing 0.03% by weight of iodine and 0.5% by weight of potassium iodide at 30°C, then post-stretched at a stretch ratio of 2 in a crosslinking bath, which was an aqueous solution containing 5% by weight of boric acid and 8% by weight of potassium iodide at 55°C, and dried to yield a polarizer.

A composition was prepared by diluting "Hydran WLS-201" (from Dainippon Ink and Chemicals Incorporated),

which was a polyether polyurethane material, with methyl ethyl ketone to 3% by weight. This composition was applied to the surface opposite to the primer-coated side of resin film (a7) using a wire bar with a gap of 12 μm and dried at 80°C for 5 minutes to yield resin film (ac2) with urethane primer (c) layer on both sides.

Laminated-type optical film (11), in which resin film (ac2) and polyetherimide film (b11) made of resin B4 were integrated, was obtained similarly to Example 1 except using resin film (ac2) instead of resin film (a7) and using 10% γ-butyrolactone solution of resin B4 instead of 5% N-methyl-2-pyrrolidone solution of resin B4.

In optical film (11), the thickness of polyetherimide film (b11) layer was 3 μm, the total light transmittance was 91%, and the light transmittance at 360 nm was 9.0%. The optical properties and film thickness of optical film (11) are shown in Table 4.

Table 4

| | Cyclic olefin resin film layer | Polyetherimide resin film layer | Optical film |
|---|---|---|---|
| Film name | (a7) | (b11) | (11) |
| Film thickness (μm) | 36 | 3 | 39 |
| Rth (nm) | 135 | 137 | 272 |
| R550 (nm) | 45 | 5 | 50 |
| R450/R550 | 1.02 | 1.07 | - |
| R650/R550 | 0.99 | 0.97 | - |

Optical film (11) was then glued, with the above aqueous pressure-sensitive adhesive, to one side of the above polarizer such that the transmission axis of the polarizer was aligned parallel with the axis of stretching direction of optical film (11), while a commercially available TAC film was glued to the other side of the polarizer with a PVA adhesive, thereby yielding polarizer (4). The transmittance and degree of polarization for the polarizer (4) obtained were measured to give 44.0% and 99.9%, respectively.

To evaluate the properties of polarizer (4), a sample was prepared as follows. At first, from a liquid crystal panel of liquid crystal TV LC-13B1-S (from Sharp Corporation), in which ASV-mode low-reflection black TFT liquid crystal was employed, a polarizer and a retardation film attached to the front from viewer' s side were peeled off. Next polarizer (4) was attached to this peeled portion such that its transmission axis was in the same direction as the transmission axis of the polarizer originally attached and the retardation film (optical film (11)) of polarizer (4) was positioned on the liquid crystal cell side. A retardation film attached to the surface of the liquid crystal panel in the rear from viewer' s side was peeled off to make a sample lacking a retardation film on the rear of the panel.

The contrast ratio of this liquid crystal TV with polarizer (4) was as high as 70 at an azimuthal angle of 45 degrees and a polar angle of 60 degrees. When the viewing angle (region with a contrast ratio of 10 or higher) was determined in all directions, the value was 170 degrees or higher in all of vertical, horizontal and oblique directions.

In the durability test, polarizer (4) was kept in an environment at 100°C or an environment at 60 °C and 90RH% for 2,000 hours and the above properties were determined in a similar way. The percentage change before and after the durability test [=(before change - after change) x 100/before change] was 5% or less for any properties.

## Claims

1. An optical film comprising a film (a) layer made of a cyclic olefin resin and a film (b) layer made of a polyimide resin or a polyetherimide resin.

2. The optical film according to Claim 1, satisfying formula (1) and (2) below:

$$(1)\quad 200\ \text{nm} \leq Rth \leq 1{,}000\ \text{nm}$$

$$(2)\quad 0 \leq R550 \leq 200\ \text{nm}$$

wherein Rth represents the retardation in the direction of film thickness at wavelength of 550 nm and is given by Rth = [(nx + ny)/2-nz] x d; R550 represents the in-plane retardation of the film and is given by R550 = (nx - ny) x d; nx represents the maximum value of refractive index in directions on the film plane; ny represents the refractive index in the direction perpendicular to the axis for nx in the film plane; nz represents the refractive index in the direction of film thickness perpendicular to the axes for nx and ny; and d represents the film thickness in nm.

**3.** The optical film according to Claim 1, wherein the film (a) layer is made of a cyclic olefin resin composed of 30 to 100 mol% of a constitutional unit represented by general formula (I) below and optionally 70 to 0 mol% of a constitutional unit represented by general formula (II) below, and the thickness of said film (a) layer is 10,000 to 200,000 nm:

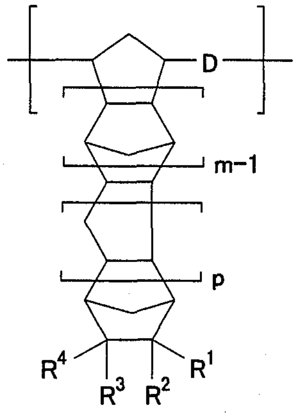

... (I)

wherein, in formula (I), m is an integer of 1 or more, p is 0 or an integer of 1 or more,
D is independently a group represented by -CH=CH- or $-CH_2-CH_2-$, each of $R^1$ to $R^4$ independently represents a hydrogen atom; a halogen atom; a substituted or unsubstituted hydrocarbon group having 1 to 3 carbon atoms that may have a linkage containing an oxygen atom, a sulfur atom, a nitrogen atom or a silicon atom; or a polar group,
$R^1$ and $R^2$ and/or $R^3$ and $R^4$ may be unified into a divalent hydrocarbon group,
either $R^1$ or $R^2$ and either $R^3$ or $R^4$ may bond to each other to form a carbocyclic or heterocyclic ring, and said carbocyclic or heterocyclic ring may be monocyclic or polycyclic;

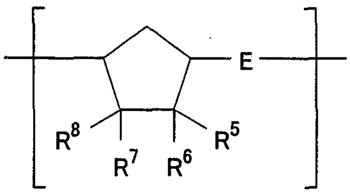

... (II)

in formula (II), E is independently a group represented by -CH=CH- or $-CH_2-CH_2-$,
each of $R^5$ to $R^8$ independently represents a hydrogen atom; a halogen atom; a substituted or unsubstituted hydrocarbon group having 1 to 30 carbon atoms that may have a linkage containing an oxygen atom, a sulfur atom, a nitrogen atom or a silicon atom; or a polar group,
$R^5$ and $R^6$ and/or $R^7$ and $R^6$ may be unified into a divalent hydrocarbon group,
either $R^5$ or $R^6$ and either $R^7$ or $R^8$ may bond to each other to form a carbocyclic or heterocyclic ring, and said carbocyclic or heterocyclic ring may be monocyclic or polycyclic.

**4.** The optical film according to Claim 1, wherein the film (a) layer satisfies formulae (3) to (6) below:

$$(3)\ 20\ nm \leq R_ath \leq 500\ nm$$

$$(4)\ 0 \leq R_a550 \leq 200\ nm$$

$$(5)\ 1.00 \leq R_a450/R_a550 \leq 1.30$$

$$(6)\ 0.70 \leq R_a650/R_a550 \leq 1.00$$

wherein $R_ath$ represents the retardation in the direction of thickness of film (a) at wavelength of 550 nm and is given by $R_ath = [(nx_a + ny_a)/2-nz_a] \times d_a$; $R_a450$, $R_a550$ and $R_a650$ represent the in-plane retardation of the film (a), $R_a$, at wavelengths of 450 nm, 550 nm and 650 nm, respectively; $R_a$ is given by $R_a = (nx_a - ny_a) \times d_a$; $nx_a$ represents the maximum value of refractive index in directions on the film (a) plane; $ny_a$ represents the refractive index in the direction perpendicular to the axis for $nx_a$ in the film (a) plane; $nz_a$ is the refractive index in the direction of thickness of film (a) perpendicular to the axes for $nx_a$ and $ny_a$; and $d_a$ represents the thickness of film (a) in nm.

**5.** The optical film according to in Claim 1, wherein the film (a) layer is a uniaxially or biaxially stretched film layer.

**6.** The optical film according to Claim 1, wherein the film (b) layer is made of a polyimide resin having an alicyclic structure.

**7.** The optical film according to Claim 1, wherein the film (b) layer is made of a polyimide resin having a constitutional unit represented by formula (III) below:

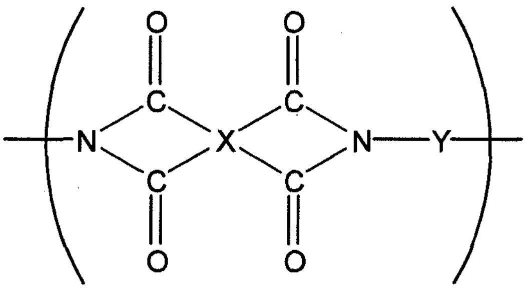

...(III)

wherein, in formula (III), X is a tetravalent organic group having an alicyclic structure and Y is a divalent organic group.

**8.** The optical film according to Claim 1, wherein the film (b) layer is made of a polyimide resin, at least in parts, having a biphenyl skeleton.

**9.** The optical film according to Claim 1, wherein the film (b) layer is made of a polyetherimide resin having a constitutional unit represented by general formula (IV) below:

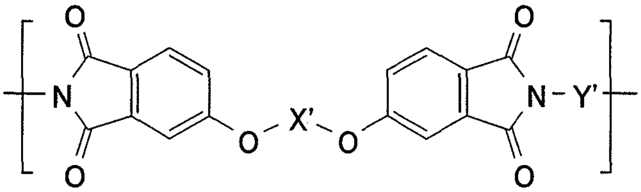

...(IV)

wherein, in formula (IV), X' and Y' may be the same or different from each other and each represents a saturated

or unsaturated hydrocarbon group.

**10.** The optical film according to Claim 9, wherein the constitutional unit represented by the formula (IV) is the constitutional unit represented by formula (V) below.

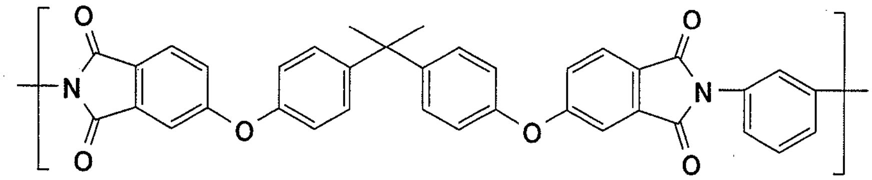

... (V)

**11.** The optical film according to Claim 1, wherein the film (b) layer satisfies formulae (7) to (10) below:

$$(7)\quad 100\ nm \leq R_bth \leq 1{,}000\ nm$$

$$(8)\quad 0 \leq R_b550 \leq 200\ nm$$

$$(9)\quad 1.00 \leq R_b450/R_b550 \leq 1.30$$

$$(10)\quad 0.7 \leq R_b650/R_b550 \leq 1.00$$

wherein $R_bth$ represents the retardation in the direction of thickness of film (b) at wavelength of 550 nm and is given by $R_bth = [(nx_b + ny_b)/2-nz_b] \times d_b$; $R_b450$, $R_b550$ and $R_b650$ represent the in-plane retardation of the film (b), $R_b$, at wavelengths of 450 nm, 550 nm and 650 nm, respectively, $R_b$ being given by $R_b = (nx_b - ny_b) \times d_b$; the sum of $R_ath$ and $R_bth$ is 1,000 nm or less and that the sum of $R_a550$ and $R_b550$ is 200 nm or less; $nx_b$ represents the maximum value of refractive index in directions on the film (b) plane; $ny_b$ represents the refractive index in the direction perpendicular to the axis for $nx_b$ in the film (b) plane; $nz_b$ is the refractive index in the direction of the thickness of film (b) perpendicular to the axes for $nx_b$ and $ny_b$; and $d_b$ represents the thickness of film (b) in nm.

**12.** The optical film according to Claim 1, comprising an acrylic primer (c) layer between the film (a) layer and the film (b) layer.

**13.** The optical film according to Claim 12, which is obtained by forming the acrylic primer (c) layer, by coating, on a surface of film (a) obtained by uniaxial or biaxial stretching, followed by forming the film (b) layer on said primer (c) layer by coating.

**14.** The optical film according to Claim 12, which is obtained by forming the acrylic primer layer (c), by coating, on a surface of unstretched film made of the cyclic olefin resin, followed by forming the film (b) layer, by coating, on said primer (c) layer and subsequently stretching the resultant laminate uniaxially or biaxially.

**15.** The optical film according to Claim 1, comprising a urethane primer (c) layer between the film (a) layer and the film (b) layer.

**16.** The optical film according to Claim 15, which is obtained by forming the urethane primer (c) layer, by coating, on a surface of film (a) obtained by uniaxial or biaxial stretching, followed by forming the film (b) layer on said primer (c) layer by coating.

**17.** The optical film according to Claim 15, which is obtained by forming the urethane primer layer (c), by coating, on a surface of unstretched film made of the cyclic olefin resin, followed by forming the film (b) layer, by coating, on said primer (c) layer and subsequently stretching the resultant laminate uniaxially or biaxially.

**18.** A polarizer comprising the optical film described in any of Claims 1 to 17.

**19.** A liquid crystal display comprising the optical film described in any of Claims 1 to 17.

**20.** A liquid crystal display comprising the polarizer described in Claim 18.

## INTERNATIONAL SEARCH REPORT

International application No.
PCT/JP2005/015484

A. CLASSIFICATION OF SUBJECT MATTER
***G02B5/30*** (2006.01), ***G02F1/13363*** (2006.01), ***B32B27/20*** (2006.01), ***B32B27/34*** (2006.01)

According to International Patent Classification (IPC) or to both national classification and IPC

B. FIELDS SEARCHED

Minimum documentation searched (classification system followed by classification symbols)
***G02B5/30*** (2006.01), ***G02F1/13363*** (2006.01), ***B32B27/20*** (2006.01), ***B32B27/34*** (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | WO 03/071319 A1 (Nitto Denko Corp.), 28 August, 2003 (28.08.03), Full text; all drawings & JP 2003-315554 A & JP 2003-315555 A & US 2005/0099562 A1 & KR 2004086403 A | 1-2,4-5,8, 11,18-20<br>3,6-7,9-10, 12-17 |
| Y | JP 2003-14901 A (JSR Corp.), 15 January, 2003 (15.01.03), Full text & WO 02/88783 A1 & EP 1397709 A1 & US 2004/0047056 A1 & CN 1462372 A & KR 2004002401 A & AU 2002253666 A1 | 3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 November, 2005 (14.11.05) | 22 November, 2005 (22.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/015484

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-155342 A (Nippon Steel Chemical Co., Ltd.), 27 May, 2003 (27.05.03), Full text; particularly, Claim 1 (Family: none) | 6-7 |
| Y | JP 7-102087 A (Nippon Telegraph And Telephone Corp.), 18 April, 1995 (18.04.95), Full text; particularly, Par. Nos. [0009] to [0010] (Family: none) | 9-10 |
| Y | JP 2004-226734 A (Toray Industries, Inc.), 12 August, 2004 (12.08.04), Full text; particularly, Par. No. [0022] (Family: none) | 12-17 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H52108 A
- JP H7287122 A
- JP H7287123 A
- JP 2003014901 A